# EUROPEAN PATENT SPECIFICATION

(11) **EP 2 413 592 B1**
(45) Date of publication and mention of the grant of the patent: **31.08.2016**
(21) Application number: 09842227.2
(22) Date of filing: 25.03.2009
(51) Int. Cl.: H04N 5/76, H04N 21/8405, H04N 21/482

(54) **PLAYBACK CONTROL PROGRAM, PLAYBACK CONTROL METHOD, AND PLAYBACK DEVICE**
WIEDERGABESTEUERPROGRAMM, WIEDERGABESTEUERVERFAHREN UND WIEDERGABEEINRICHTUNG
PROGRAMME DE COMMANDE DE LECTURE, PROCÉDÉ DE COMMANDE DE LECTURE ET DISPOSITIF DE LECTURE

(43) Date of publication of application: 01.02.2012
(73) Proprietor: Fujitsu Limited, Kawasaki-shi, Kanagawa 211-8588 (JP)
(72) Inventor: KAMIWADA, Toru, Kawasaki-shi Kanagawa 211-8588 (JP); HOTTA, Yoshinobu, Kawasaki-shi Kanagawa 211-8588 (JP); KATSUYAMA, Yutaka, Kawasaki-shi Kanagawa 211-8588 (JP); FUJIMOTO, Katsuhito, Kawasaki-shi Kanagawa 211-8588 (JP); TERASAKI, Takashi, Kawasaki-shi Kanagawa 211-8588 (JP); URUSHIHARA, Masashi, Kawasaki-shi Kanagawa 211-8588 (JP)
(74) Representative: Wilding, Frances Ward
(86) International application number: PCT/JP2009/055976
(87) International publication number: WO 2010/109613

(56) References cited:
- EP-A1- 1 830 282
- EP-A2- 1 569 234
- WO-A2-02/37498
- JP-A- 2005 252 586
- JP-A- 2006 157 197
- JP-A- 2006 332 765
- JP-A- 2007 148 885
- JP-A- 2008 299 411
- US-A1- 2002 126 203

## Description

### TECHNICAL FIELD

The present technology relates to the technology of processing video data.

### BACKGROUND ART

As well known, a user of a computer is able to preserve video content into the computer utilizing a television tuner for receiving television signals sent from a television signal transmission device in a television station. The user is also able to preserve a video data into the computer by downloading the video data from a video delivery site or a video sharing sites through a network. Here, the video delivery site is a Web site for a contents holder to accept a request for a video data from a user and to deliver the video data. Meanwhile, the video sharing site is a Web site to retain some pieces of video data up-loaded by users and to provide each user with the video data selected by the user.

Moreover, the video data is read by a video replay application in the computer, thereby a piece of video content is replayed.
[Patent document 1] Japanese Laid-Open Patent Publication No. 2005-252586
[Patent document 2] Japanese Laid-Open Patent Publication No. 2006-332765
[Patent document 3] Japanese Laid-Open Patent Publication No. 2002-335478

### DISCLOSURE OF THE INVENTION

### PROBLEMS TO BE SOLVED BY THE INVENTION

The user of the computer does not need to replay all of one piece of video content, and so the user can select an interesting part for oneself and replay only the selected part. For instance, in a case where the video content is a report program, the user can replay only the pieces of news on the themes related to his/her work. Moreover, in a case where the video content is, for instance, a sports program, the user can replay only the highlight scenes.

According to the conventional video replay application, however, the user is required to fast-forward and rewind many times to select only the interesting part for oneself from the video content. The user has to do such operations repeatedly in order to retrieve interesting parts for oneself from two or more pieces of video content. Therefore, most users do not perform such time-consuming operations for searching for a interesting part.

Accordingly, it is an object of the present technology, which was devised under such circumstances, to enable a user to view easily his/her interesting parts of pieces of video content preserved in the computer.

### MEANS FOR SOLVING THE PROBLEMS

This object is achieved by a computer-readable medium, a replay control method and a replay apparatus as set out in the independent claims.

Preferred embodiments of the invention are set out in the dependent claims.

According to this replay control method, the computer, when one or more keywords are input, detects from the video content a section part expressing a word string including a input keyword and replay the detected section part by utilizing the replay means.

### EFFECTS OF THE INVENTION

Accordingly, use of one aspect of the present technology enables a user to view easily only his/her interesting part of video content retained in a computer.

### BRIEF DESCRIPTION OF DRAWINGS

FIG. 1 is a diagram illustrating a configuration of a television system according to a first embodiment; FIG. 2 is a diagram illustrating a configuration of a personal computer to which television capability is added; FIG. 3 is a diagram illustrating a configuration of a television application; FIG. 4 is a diagram schematically illustrating a content information table; FIG. 5 is a diagram illustrating an example of images of video content for explaining section parts extracted from video content; FIG. 6 is a diagram schematically illustrating a candidate information table;
FIG. 7 is a diagram illustrating an example of a frame image for explaining a word string appearance region;
FIG. 8 is a flowchart of a candidate extraction process;
FIG. 9 is a flowchart of a section part specifying subroutine;
FIG. 10 is a flowchart of a section part registration subroutine;
FIG. 11 is a flowchart of a section part searching process;
FIG. 12 is a diagram illustrating an example of an input screen;
FIG. 13 is a diagram schematically illustrating a work table;
FIG. 14 is a flowchart of a search subroutine;
FIG. 15 is a diagram schematically illustrating relationship between number of keyword included in text data, and first and second adjustment time;
FIG. 16 is a flowchart of a total replay time adjustment subroutine;
FIG. 17 is a diagram schematically illustrating video data obtained by recording television program with closed captions;
FIG. 18 is a flowchart of a section part specifying subroutine in a second embodiment
FIG. 19 is a diagram illustrating a candidate information table in the second embodiment typical;
FIG. 20 is a flowchart of a search subroutine in the second embodiment;
FIG. 21 is a diagram illustrating a configuration of a computer network system in a third embodiment;
FIG. 22 is a diagram illustrating a configuration of a video replay machine in the third embodiment;
FIG. 23 is a diagram illustrating a configuration of a video replay application in the third embodiment;
FIG. 24 is a flowchart of a section part searching process in a fourth embodiment
FIG. 25 is a diagram illustrating a configuration of a computer network system in a fifth embodiment
FIG. 26 is a diagram illustrating a configuration of a video replay machine in the fifth embodiment; and
FIG. 27 is a diagram schematically illustrating application data and tables stored in the storage unit of the video replay machine in the fifth embodiment.

### BEST MODE OF CARRYING OUT THE INVENTION

Embodiments of the present technology will hereinafter be described with reference to the drawings.

### [First embodiment]

### «Configuration»

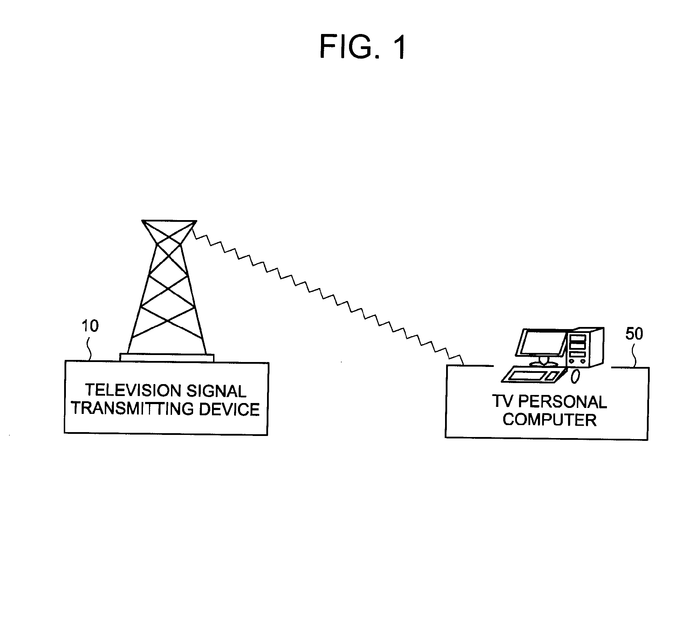

Fig. 1 is a diagram illustrating a configuration of a television system according to the first embodiment.

The television system according to the first embodiment includes a television signal transmitting device 10 and a personal computer 50 to which a television function is added. Here, the television capability is defined as capability to view and preserve television programs broadcasted by the television station. The personal computer to which the television capability is added is hereinafter referred to the TV personal computer.

The television signal transmitting device 10 transmits a television signal as a signal on a carrier of a channel, or a bandwidth, allocated to the television station This television signal transmitting device 10 is equipped in facilities of the television station. The television signal transmitting device 10 may be a transponder in a broadcast satellite or a telecommunications satellite placed in a predetermined satellite orbit. The transponder receives the television signal on a carrier of an up-link bandwidth from the transmitting device within the television station on the ground, and converts the received television signal to a signal on a carrier of a down-link bandwidth and transmits the signal toward the ground. Moreover, the television signal transmitting device 10 may be a headend device equipped in facilities of a cable TV broadcaster. The headend device receives, through a high-performance antenna, the television signal from the television signal transmitting device 10 in the television station, and transmits the received television signal to ordinary homes and offices by cable. Moreover, EPG (electronic program guide) information may be superposed, as EPG signal, to the television signal transmitted from the television signal transmitting device 10. Here, the EPG information contains pieces of television program information each indicating outline of a television program scheduled to be broadcasted by the television station in, e.g., one week. The television program information contains at least a channel number, start time and finish time of the television program.

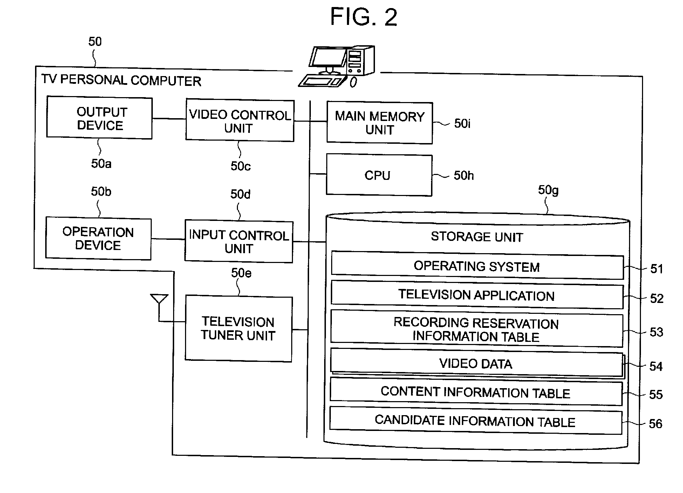

Fig. 2 is a diagram illustrating a configuration of the TV personal computer 50.

The TV personal computer 50 is provided with an output device 50a, an operation device 50b, and a main body to which the devices 50a and 50b are connected. An example of the output device 50a is a liquid crystal display with the speaker. An example of the operation device 50b is a keyboard and a mouse. The main body contains a video control unit 50c, an input control unit 50d, a television tuner unit 50e, a storage unit 50g, a CPU (central processing unit) 50h and a main memory unit 50i.

The video control unit 50c generates an audio-video signal based on audio information and video information passed from the CPU 50h, and output it to the output device 50a. The output device 50a outputs audio and video based on the audio-video signal input from the video control unit 50c.

The input control unit 50d detects operation to the operation device 50b and notifies CPU 50d of the effect that an operation is performed and a kind of the performed operation.

The television tuner unit 50e receives television signals of two or more broadcasting channels from the television signal transmitting device 10 (or a transponder of a space satellite or a headend device). Moreover, the television tuner unit 50e takes out, from the received television signals of two or more broadcasting channels, the television signal of the viewing target broadcasting channel by tuning. Then, in the case where the television signal taken out is an analog signal, the television tuner unit 50e obtains video data by digitizing the television signal, and output it to the main memory unit 50i or the storage unit 50g. Moreover, in the case where the television signal taken out is a digital signal, the television tuner unit 50e obtains video data from the television signal and output it to the main memory unit 50i or the storage unit 50g. Note that, as broadcasting other than broadcasting by the analog terrestrial wave, there are broadcasting by analog BS (Broadcasting Satellite) wave, digital terrestrial wave, digital BS wave, and analog digital CS (Communication Satellite) wave. In broadcasting by these waves other than the analog terrestrial wave, the video data is compressed. Therefore, the television tuner unit 50e contains a decoder to extend video data, which is used in the case where the video data obtained from the television signal is compressed. The television tuner unit 50e is connected to a TV antenna (or a headend device) set to an ordinary home or an office by a coaxial cable. Note that the television tuner unit 50e of the first embodiment is a television tuner card that is set into the main body of TV personal computer 50 as a removal adaptor (a expansion card). However, the television tuner unit 50e may be a television tuner box connected to an interface unit such as a USB (Universal Serial Bus) interface unit. Moreover, the television tuner unit 50e is provided with the hardware component that functions as an encoder for compressing video data obtained from the television signal into data appropriate for recording. An example of this encoder is an MPEG (moving picture experts group) encoder. Note that, when the television tuner unit 50e is a unit having no hardware component that functions as such an encoder, a software component that functions as an encoder is installed into the storage unit 50g.

The storage unit 50g is provided with a recording medium in which various programs and various data are stored. The storage unit 50g, by obeying instructions from the CPU 50h, writes data into the recording medium and/or reads out data from the recording medium. Examples of the storage unit 50g are an SSD (Solid State Drive) device, an HDD (Hard Disk Drive) device, a BD (Blu-ray Disk) drive device, a DVD (digital versatile disk) drive device, a +R/+RW drive device, a CD (Compact Disk) drive device, a memory card drive device, and a flexible disk drive device. Moreover, as examples of a recording medium, there are a silicon disk, a hard disk, a BD, a DVD, a +R/+RW, a CD, a memory card, and a flexible disk. The silicon disk is a disk containing a nonvolatile semiconductor memory such as a flash memory. Examples of BD are a BD-R, a BD-RE (Rewritable), and BD-ROM (Read Only Memory). Examples of DVD are a DVD-R (Recordable), a DVD-RW (Rewritable), DVD-ROM, and DVD-RAM (Random Access Memory). Examples of CD are a CD-R, a CD-RW, and a CD-ROM. Examples of memory card are a CompactFlash (trademark of the United States Sandisk Co.), a SmartMedia (trademark of the Toshiba Co.), SD card (trademark of the United States Sandisk Co., the Matsushita Electric Industrial Co., Ltd. Co., and the Toshiba Co.), a Memory Stick (trademark of the Sony Co.), and an MMC (trademark of the United States Siemens Co. and the United States Sandisk Co.). The recording medium exemplified above may be the one that can be attached/removed to/from the drive device or the one installed fixedly in the drive device. Each type of the recording medium exemplified above is at least a computer readable medium.

The CPU 50h performs processes according to the programs in the storage unit 50g. Moreover, the CPU 50h temporarily stores programs and data in the main memory unit 50i, and allocates work areas in the main memory unit 50i.

The storage unit 50g of the TV personal computer 50 in the first embodiment is stored with an operating system 51, a television application 52, a recording reservation information table 53, some pieces of video data 54, a content information table 55, and a candidate information table 56.

In the following discussion, a term relating to a program, such as software, application, module component, etc. might be also used as a term that means the capability achieved by the CPU 50h that executes the program.

The operating system 51 acts as an intermediary between software and hardware, and performs memory space management, file management, process management and task management, mainly.

The television application 52 is a software component to add the above-mentioned television capability to the personal computer.

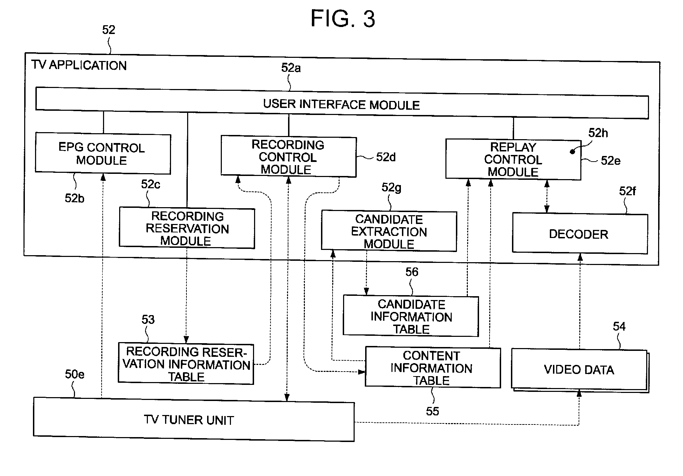

Fig. 3 is a diagram illustrating a configuration of the television application 52.

The television application 52 includes a user interface module 52a, an EPG control module 52b, a recording reservation module 52c, a recording control module 52d, a replay control module 52e, a decoder 52f, and a candidate extraction module 52g.

The user interface module 52a accepts requests from the operator through prescribed GUI (Graphical User Interface). Moreover, the user interface module 52a submits a process to a module corresponding to the request accepted from the operator or executes a process corresponding to the request. As the requests that can be accepted from the operator, there are, for instance, a request for displaying the EPG, a request for reservation of a timer recording of a television program, a request for starting or stopping recording the television program on the air, a request for replaying the recorded television program, and a request for updating various pieces of setting information.

The EPG control module 52b, when receiving a request from the user interface module 52a, obtains EPG information from the television signal through the television tuner unit 50e and hands over the EPG information to the user Interface module 52a. Note that the user interface module 52a, when receiving the EPG information from the EPG control module 52b, performs a process of displaying an electronic program guide on the output device 50a based on the EPG information.

The recording reservation module 52c reserves a recording of the television program that the operator has selected from the electronic program guide. Moreover, the recording reservation module 52c, when accepting a channel number, start time and finish time from the operator through the user interface module 52a, reserves a recording of the television program specified by the channel number, the start time and the finish time. To reserve a recording of a television program, the recording reservation module 52c stores a piece of information including a channel number, start time, finish time, etc. into the recording reservation information table 53 as one piece of recording reservation information.

The recording control module 52d makes a recording of the television program specified by each piece of recording reservation information, in the reservation information table 53, whose start time comes. Moreover, when the operator directs, by using the user interface module 52a, that a television program on the air should be recorded, the recording control module 52d starts the recording of the television program. Then, the recording control module 52d stops the recording when the operator directs that the recording should be stopped. To record a television program, the recording reservation module 52c performs a process of storing a video data output from the encoder within the television tuner 50e into the storage unit 50g. When the video data 54 is stored in the storage unit 50g as a result of the completion of the recording of the television program, the recording reservation module 52c stores in the content information table 55 a piece of content information, which will be described later, relating to the recorded video data 54. Subsequently, the recording reservation module 52c deletes the recording reservation information corresponding to the recorded television program from the recording reservation information table 53.

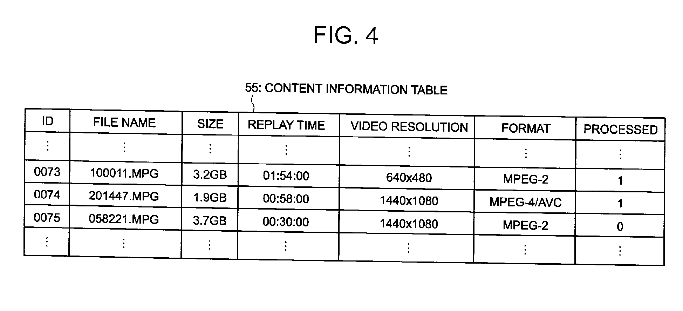

Fig. 4 is a diagram schematically illustrating the content information table 55.

The content information table 55 has records the number of which equals to the number of pieces of video data 54 in the storage unit 50g. Each record has "ID (identification)" "File name", "size", "replay time", "video resolution", "format" and "processed" fields. The "ID" field is stored with an identification data that uniquely identifies one video data 54. The "file name" field is stored with a file name of the video data 54. The "size" field is stored with data size of the video data 54. The "replay time" field is stored with replay time of the video content that is replayed based on the video data 54, that is, time required to replay the video content from start to finish. The "video resolution" field is stored with a vertical resolution and a horizontal resolution of the video among the audio and the video of the video content replayed based on the video data 54. The "format" field is stored with a piece of information indicating a compression method of the video data 54. The "processed" field is stored with a processed flag indicating whether or not the process of the video data 54 by the after-mentioned candidate extraction module 52g, which will be discussed later, has been completed. Note that, in the first embodiment, the process flag "1" indicates that the process by the after-mentioned candidate extraction module 52g has been completed. On the contrary, the process flag "0" indicates that the process by the after-mentioned candidate extraction module 52g has not been completed. The content information is information that includes pieces of information stored in the above-mentioned fields, i.e., the identification data, the file name, the replay time, the video resolution, the format and the processed flag,

Referring back to FIG. 3, the replay control module 52e will be discussed. The replay control module 52e performs a process of replaying one piece of video content selected by the operator from one or more pieces of video content recorded in the TV personal computer 50. The replay control module 52e, through the user interface module 52a, presents to the operator pieces of content information within the content information table 55 of FIG. 4 in a manner where the operator can select arbitrary piece of content information. The replay control module 52e accepts, through user interface module 52a, designation of the video content to be replayed. Moreover, the replay control module 52e replays a piece of video content by utilizing the decoder 52f. Specifically, the replay control module 52e reads from the storage unit 50g a video data 54 for replaying the video content to be replayed, and feeds it to the decoder 52f. The decoder 52f extends the video data 54 fed from the replay control module 52e, and outputs the video content to the output device 50a.

The candidate extraction module 52g performs a process of extracting a section part expressing a word string from each pieces of video content that can be replayed based on multiple pieces of video data 54 recorded in the storage unit 50g. Here, the section part will be explained for a better understanding of the first embodiment, though the explanation of the candidate extraction module 52g is not completed.

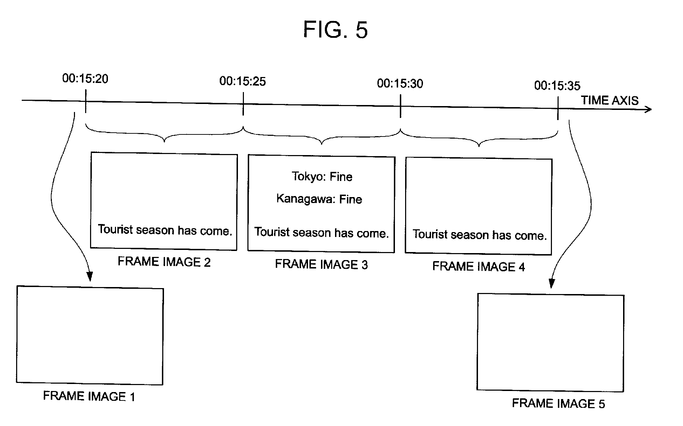

Fig. 5 is an example of images of a video content for explaining section parts extracted from the video content. In the images of the video content illustrated in FIG. 5, nothing is displayed in the image (frame image 1) immediately before 00:15:20 on the time axis of the video content. The word string, "The tourist season has come.", is displayed within each of the images (frame images 2-4) at 00:15:20 to 00:15:35 on the same time axis. Further, within each of the images (frame image 3) at 00:15:25 to 00:15:30 on the same time axis, the word strings, "Tokyo: fine" and "Kanagawa: fine", are displayed. Moreover, nothing is displayed within the image (frame image 5) immediately after 00:15:35 on the same time axis.
"The tourist season has come.", "Tokyo: fine" and "Kanagawa: fine" are displayed within the same image, but these word strings are arranged with a gap that enables to prevent the character recognition engine (not illustrated) from recognizing these word strings as one lump. Here, a word string recognized as a lump is defined as a word string drawn in a block that is segmented by a preceding process of the character recognition engine from a processing target image as a block where one or more characters are drawn. In other words, there are cases where one image is segmented into blocks in each of which a word string is drawn. Note that the character recognition engine segments a processing target image into blocks in each of which one or more characters is drawn, and specifies, by performing a prescribed process, text data (character codes) corresponding to a word string drawn in each block. Here, the prescribed process is a process that is performed based on the pattern matching method, the zonde method, the stroke analysis method, etc.

In the case of FIG. 5, the candidate extraction module 52g in FIG. 3 extracts from the video content the section part (part from 00:15:20 to 00:15:35) where the word string, "The tourist season has come.", is continuously displayed. Moreover, the candidate extraction module 52g extracts from the video content the section part (part from 00:15:25 to 00:15:30) where the word string, "Tokyo: fine", is continuously displayed. In addition, the candidate extraction module 52g extracts from the video content the section part (part from 00:15:25 to 00:15:30) where the word string, "Kanagawa: fine", is continuously displayed. Thus, in the first embodiment, continuous images in which a word string recognized as a lump by the after-mentioned character recognition engine is displayed are extracted as a section part. Therefore, when two or more word strings such as "Tokyo: fine" and "Kanagawa: fine" are in the video content, different section parts are extracted for the word strings, respectively. Moreover, two or more section parts each having same start point time and end point time might be extracted. Two or more section parts whose intervals overlap might also be extracted. Furthermore, Two or more section parts one of which is included in the other might be extracted.

Incidentally, the word string in the first embodiment can be any characters as long as they are characters displayed in images of video content. As characters expressing a word string in the images, there are, for example, a news flash telop, a movie title, a credit title, and a caption. Moreover, the word string may be characters written either vertically or horizontally within frame images that compose the section part. Moreover, it is not necessary that the word string is the one that conforms to the grammar of some language. Furthermore, the word string may be phoneme characters such as kana characters, Chinese characters, etc.; syllabic characters, like alphabet; or combination of these characters. The word string may also be, for instance, a string of exclamations or symbols. In either case, the word string contains one or more words.

The explanation of the candidate extraction module 52g in FIG. 3 will be continued. When having extracted one or more section parts from the video content, the candidate extraction module 52g stores a piece of information on each extracted section part into the candidate information table 56. The information on the section part extracted by the candidate extraction module 52g, though a detailed discussion will be given later on, is retrieved by the after-mentioned section part searching component 52h to which one or more keywords are given from the operator (user). That is, the information on the section part extracted beforehand by the candidate extraction module 52g is used as a candidate of the object to be retrieved by the operator. Therefore, the information on the section part extracted by the candidate extraction module 52g is hereinafter called the candidate information.

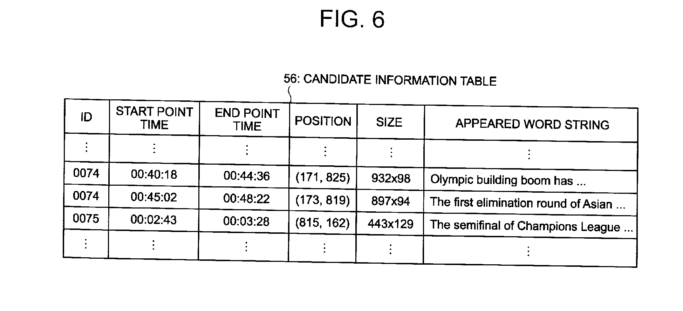

Fig. 6 is a diagram schematically illustrating the candidate information table 56.

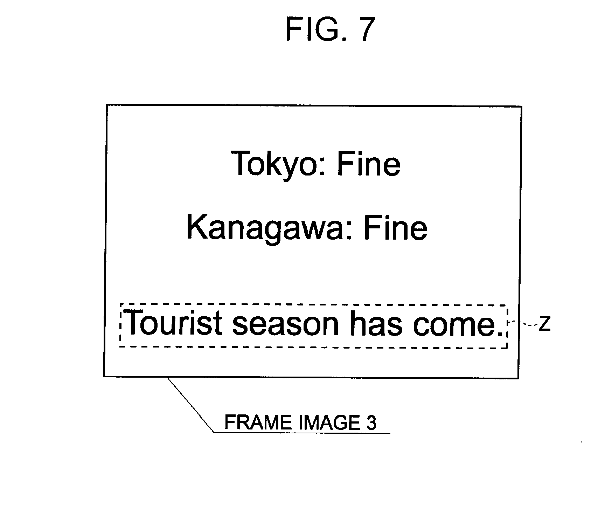

The candidate information table 56 has records the number of which equals to the number of the section parts extracted from pieces of video content. Each record has "ID", "start point time", "end point time", "position", "size" and "appeared word string" fields. The "ID" field is stored with an identification data of a video data 54 for replaying a piece of video content including one or more section parts. The "start point time" field is stored with a time of a start point of a section part of the video content. The "end point time" field is stored with a time of an end point of the section part of the video content. The "position" field is stored with a position data that is coordinates of the upper left corner of a rectangle block segmented from a frame image by the preceding process of the character recognition engine not illustrated. That is, the "position" field is stored with a position data that is coordinates of the upper left corner of the rectangle block where the word string is drawn. Here, coordinates are coordinates in the two dimensional coordinate system, the origin of which is set to the upper left corner of the frame image. The rectangle Z with dashed lines in FIG. 7 indicates the contour of the rectangular block where the word string, "The tourist season has come", is drawn. The rectangular block will hereinafter be denoted as the word string appearance region. In the "size" field, stored are a vertical size and a horizontal size of the word string appearance region on the two dimensional coordinate system defined on the frame image. Note that dot is exemplified as a unit of size. The "appeared word string" field is stored with a text data of the word string that is displayed in the images of the section part as characters. The candidate information is information that contains pieces of information stored in the above-mentioned fields. That is, the candidate information contains the identification data, the start point time, the end point time, the position data, the vertical and horizontal sizes, and the text data. This candidate table 56 is an example of correspondence information that includes section information, a word string and an identification data of a video data for replaying video content that are associated with each other. Note that this example is the one in a table form, however, the correspondence information in any form can be used as long as the correspondence between these pieces of information can be specified.

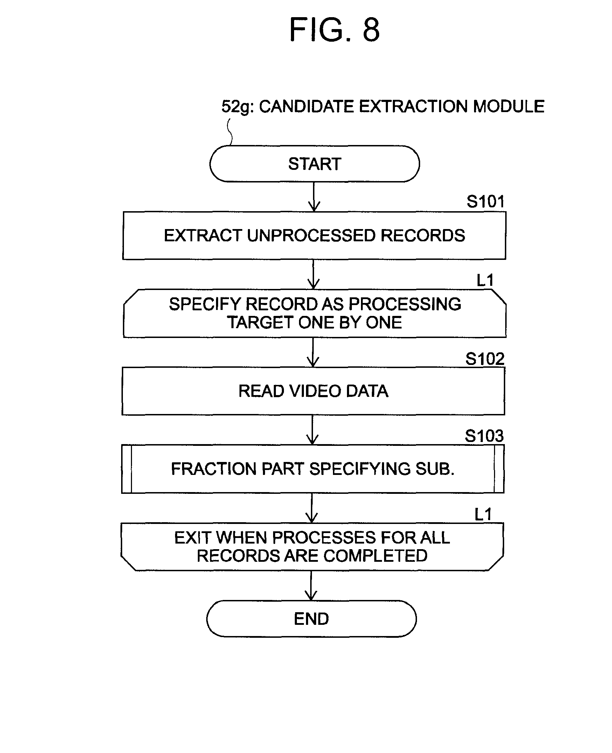

As discussed above, the candidate extraction module 52g in FIG. 3 extracts the section parts from the pieces of video content recorded in the TV personal computer 50, and stores one piece of candidate information on each extracted section part into the candidate information table 56 in FIG. 6. Specific contents of processing by this candidate extraction module 52g will be discussed later with reference to FIG. 8 through FIG. 10. This candidate extraction module 52g of the first embodiment is so configured as to be executed, for instance, once a day at an appointed time. However, it is possible to configure modules so that completion of a television program recording by the recording control module 52d acts as a trigger to activate the candidate extraction module 52g It is also possible to configure modules so that the operator's instruction that is directly input by using the user interface module 52d acts as a trigger to activate the candidate extraction module 52g.

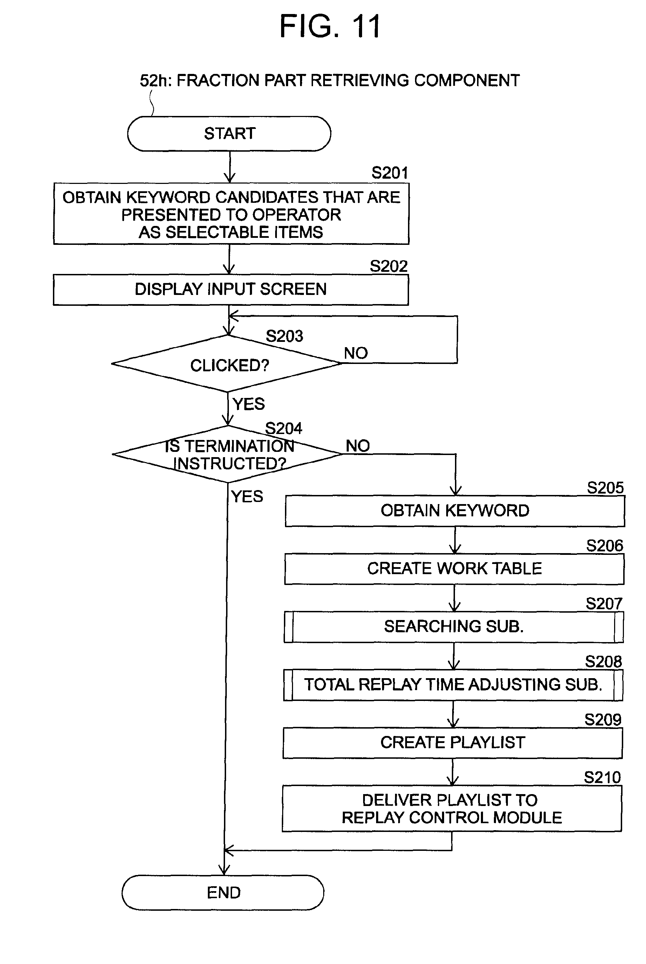

The replay control module 52e of the first embodiment includes the section part searching component 52h. The section part searching component 52h accepts one or more keywords from the operator, and searches a plurality of pieces of candidate information, i.e., the candidate information table 56 in FIG. 6. Moreover, the section part searching component 52h generates a playlist defining replay order of the section parts specified by the detected pieces of candidate information. The playlist is delivered from this section part searching component 52h to the replay control module 52e. The replay control module 52e having received the playlist sequentially replays the section parts according to the playlist by utilizing the decoder 52f. That is, when two or more pieces of candidate information are detected by the keyword search, two or more section parts specified by the detected pieces of candidate information are continuously replayed in order. Specific contents of processing by this section part searching component 52h will be discussed later with reference to FIG. 11 through FIG. 16. Note that the section part searching component 52h is activated, for instance, when a prescribed button is clicked. The prescribed button may be contained on an application screen displayed under control of the user interface module 52a. Moreover, the section part searching component 52h may start automatically when the television application 52 is activated.

### «Process»

### <Candidate extraction>

Fig. 8 is a flowchart of the candidate extraction process that the CPU 50h performs according to the candidate module 52g.

After starting the candidate extraction process, at first step S101, the CPU 50h extracts from the content information table 55 illustrated in FIG. 4 each unprocessed record, i.e. each record whose processed flag in the "processed" field is "0". Afterwards, the CPU 50h executes the first process loop L1.

In the first process loop L1, the CPU 50h specifies one record as a processing target from among one or more records extracted in step S101, and executes steps S102 and S103 for the specified record. Namely, the CPU 50h sequentially executes steps S102 and S103 for each of the records extracted in step S101.

In step S102, the CPU 50h performs a process of reading out a video data 54 specified by the file name in the processing target record from the storage unit 50g.

In next step S103, the CPU 50h calls and executes a section part specifying subroutine. The section part specifying subroutine is a process of specifying the section part where the word string is expressed in the video content.

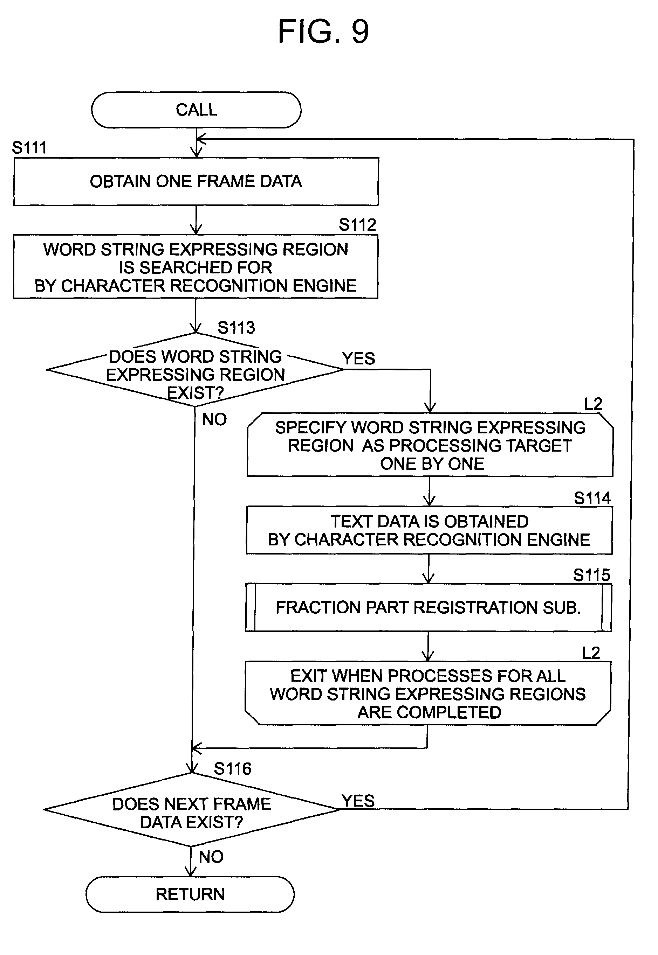

FIG. 9 is a flowchart of the section part specifying subroutine.

After starting the section part specifying subroutine, in first step S111, the CPU 50h takes out visual data from the video data 54 read in step S102 in FIG. 8. Subsequently, the CPU 50h obtains one frame data from a plurality of pieces of frame data that composes the visual data taken out.

In next step S112, the CPU 50h makes the character recognition engine not illustrated perform the character segmentation process for the frame data obtained in step S111. As mentioned before, the character segmentation process is the process of segmenting a processing target image into blocks in each of which characters are drawn, which is executed by the character recognition engine not illustrated as the preceding process. That is, the CPU 50h searches for, by utilizing the character recognition engine not illustrated, a word string appearance region (refer to the dashed line frame Z in FIG. 7) from one frame image based on the frame data obtained in step S111. In this search, two or more word string appearance regions might be searched from the frame image as previously discussed on the case illustrated in FIG. 5.

In next step S113, the CPU 50h judges, on basis of the search result in step S112, whether one or more word string appearance regions exist in the frame image based on the frame data obtained in step S111. If the word string appearance region doesn't exist in the frame image based on the frame data obtained in step S111, the CPU 50h advances the processing from step S113 to step S116. Whereas if one or more word string appearance regions exist in the frame image based on the frame data obtained in step S111, the CPU 50h diverts the processing from step S113, and executes the second process loop L2.

In the second process loop L2, the CPU 50h sequentially specifies, from one or more word string appearance regions that are searched for by the search in step S112, one word string appearance region for a processing target, and executes steps S114 and S115 for each processing target. Namely, the CPU 50h sequentially executes steps S114 and S115 for each of word string appearance regions that are searched for by the search in step S112.

In step S114, the CPU 50h makes the character recognition engine perform a process of specifying a text data corresponding to the word string expressed in the processing target word string appearance region. As a result of this control, the CPU 50h obtains the text data corresponding to the word string.

In next step S115, the CPU 50h calls and executes a section part registration subroutine. The section part registration subroutine is a process of registering a piece of candidate information on the section part specified in steps S112 through S114 into the candidate information table 56 of FIG. 6.

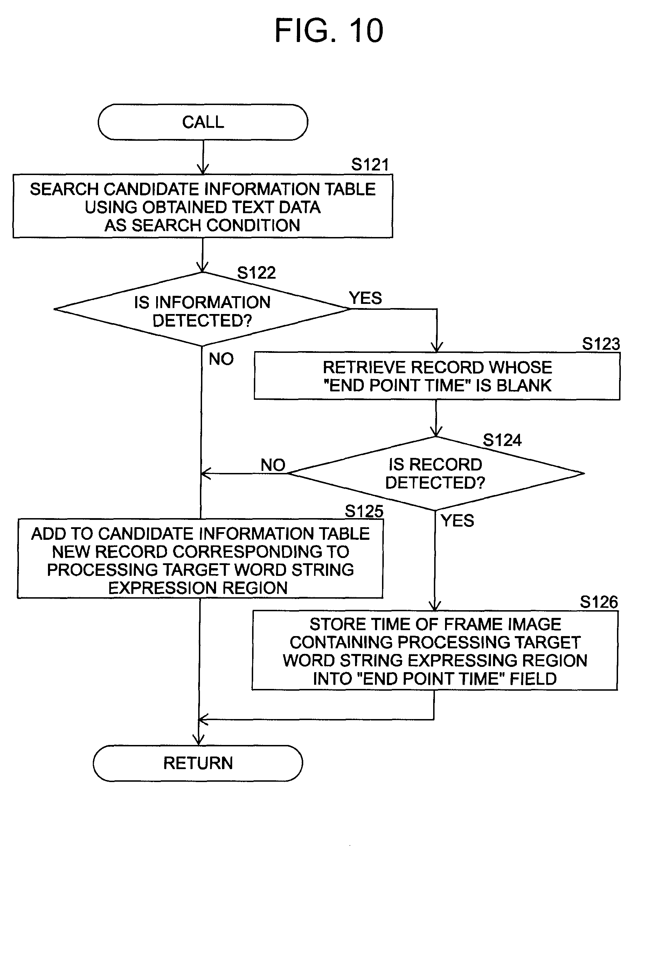

FIG. 10 is a flowchart of the section part registration subroutine.

After starting the section part registration subroutine, in first step S121, the CPU 50h searches the candidate information table 56 in FIG. 6 with using the text data obtained in step 114 as the search condition.

In next step S122, the CPU 50h judges whether or not one or more records each of which meets the search condition can be searched from the candidate information table 56 in FIG. 6. If record that meets the search condition cannot be searched from the candidate information table 56 in FIG. 6, the CPU 50h advances the processing from step S122 to step S125. On the other hand, if one or more record that meet the search condition can be searched from the candidate information table 56 in FIG. 6, the CPU 50h diverts the processing from step S122 to step S123.

In step S123, the CPU 50h further retrieves, from the records searched by the search in step S121, record whose "end point time" field is blank.
In next step S124, the CPU 50h judges whether the record whose "end time" field is blank is retrieved by the retrieval in step S123. If the record whose "end time" field is blank is not retrieved by the retrieval in step S123, the CPU 50h diverts the processing from step S124 to step S125.

In step S125, the CPU 50h performs a process of adding a new record corresponding to the processing target word string appearance region to the candidate information table 56 in FIG. 6. Specifically, the CPU 50h read time of the frame image containing the processing target word string appearance region on the time axis of the video content. The specified time is stored in the "start point time" field of the new record as start point time of the section part. Moreover, in the "ID" field of the new record, the identification data included in the processing target record of the first process loop L1 is stored. In the "position" field of the new record, coordinates of the upper left corner of the processing target word string appearance region in the two dimensional coordinate system defined on the frame image containing the processing target word string appearance region are stored. In the "size" field of the new record, the vertical and horizontal sizes of the processing target word string appearance region in the two dimensional coordinate system defined on the frame image containing the processing target word string appearance region are stored. Furthermore, in the "appeared word string" field of the new record, the text data obtained in step S114 of FIG. 9 is stored. However, the end point time of the section part is not contained in the new record. Namely, in step S125, a piece of candidate information containing no end point time is stored in the candidate information table 56 in FIG. 6 by adding the new record. When the process of adding the new record is completed, the CPU 50h terminates the section part registration subroutine of FIG. 10.

On the other hand, if the record whose "end time" field is blank is detected by the retrieval in step S123, the CPU 50h advances the processing from step S124 to step S126.

In step S126, the CPU 50h specify time of the frame image containing the processing target word string appearance region on the time axis of the video content. Subsequently, the CPU 50h stores the specified time in "end point time" field of the detected record as end point time of the section part. Recording of a piece of candidate information, i.e., the registration of one section part, is completed when step S126 is executed. When the record of candidate information is completed, the CPU 50h terminates the section part registration subroutine in FIG. 10.

When the section part registration subroutine is finished, the CPU 50h returns to the section part specifying subroutine in FIG. 9, and terminates the second process loop L2 for the current processing target word string appearance region.

The CPU 50h exits from the second process loop L2 and advances the processing to step S116 when having executed steps S114 and S115 for every word string appearance region searched from the frame image by the search in step S112.

In step S116, the CPU 50h judges whether or not posterior frame data of the frame data obtained in step S111 exists. Specifically, the CPU 50h judges whether frame data after the frame data obtained in step S111 by a predetermined number of pieces of frame data exists or not. If the frame data after the frame data obtained in step S111 by the predetermined number of pieces of frame data exists, the CPU 50h returns process to step S111, and performs a process of obtaining the frame data after the frame data obtained in step S111 by the predetermined number of pieces of frame data. Here, when the processing target video content that is specified by the processing target record of the first process loop L1 is a moving image of 30 frames per second, the predetermined number in step S116 may be, for instance, 30. In this case, the character recognition engine not illustrated processes frame images of the video content at a rate of one frame image per second. On the other hand, if the frame data after the frame data obtained in step S111 by the predetermined number of pieces of frame data exists, the CPU 50h terminates the section part specifying subroutine in FIG. 9.

When the section part specifying subroutine is finished, the CPU 50h returns to the candidate extraction process in FIG. 8, and terminates the first process loop L1 for the current processing target record.
The CPU 50h exits from the first process loop L1 when having executed steps S102 and S103 for every record extracted in step S101 and terminates the candidate extraction process in FIG. 8

According to the candidate extraction process described above, the section parts each expressing one word string can be extracted in advance from the pieces of video content recorded in the TV personal computer 50.

### <Section part searching>

FIG. 11 is flowchart of a section part searching process that the CPU 50h performs according to the section part searching component 52h.

After starting the section part searching process, at first step S201, the CPU 50h obtains keyword candidates that are presented to the operator as selectable items. Details of keyword candidates will be discussed later.

In next step S202, the CPU 50h performs a process of displaying an input screen for the operator (user) to input one or more keywords. The input screen is displayed on the output device 50a through the user interface module 52a.

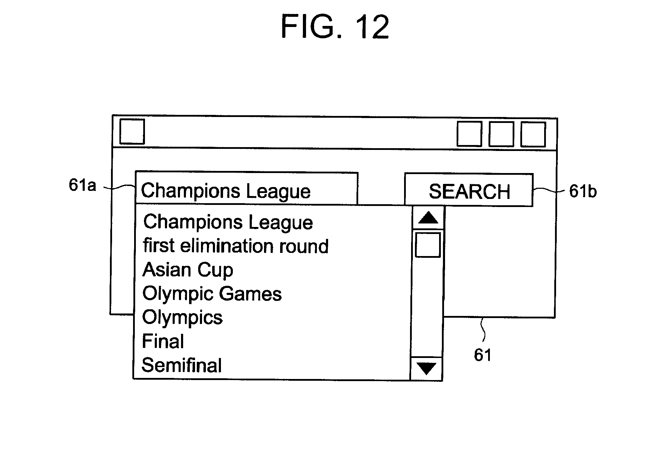

FIG. 12 is diagram illustrating an example of the input screen 61.

The input screen 61 illustrated in FIG. 12 includes a combo box 61a and a submit button 61b. The combo box 61a has a capability to develop a drop-down list box when a prescribed button (not illustrated) is clicked. In the drop-down list box, keyword candidates obtained in step S201 are displayed as selectable items. Moreover, the operator can type a keyword in the combo box 61a. Note that the keyword input directly from the operator into this combo box 61a may be accumulated in a table not illustrated. In this case, the CPU 50h can obtain the keyword candidates from the table not illustrated in step S201. Moreover, each of the keywords in the table not illustrated may associated with frequency for which the keyword is used for retrieval. In this case, the CPU 50h can extracts a prescribed number of keywords in descending order of the frequencies and display the extracted keywords in the drop-down list box as keyword candidates. Therefore, even if the number of the keywords accumulated in the table not illustrated becomes huge, the operator can select the keyword candidate without difficulty. Moreover, the keyword candidates may be extracted in advance from text data stored in the "appeared word string" field of each record in the candidate information table 56 in FIG. 6. In this case, the extraction of keywords from each text data may be performed by a process of dividing each text data into words by a morphological analysis engine not illustrated and then selecting each word that matches one of words registered in the predefined dictionary. The submit button 61b is a button for directing a start of the search for candidate information with using the keyword input to the combo box 61a as the search condition.

If the section part searching component 52h is a component that starts automatically when the television application 52 is activated, the input screen 61 illustrated in FIG. 12 may be a desktop gadget.

After performing the process of displaying the input screen 61 exemplified in FIG. 12, the CPU 50h advances the processing to step S203 in FIG. 11.

In step S203, the CPU 50h waits till the submit button 61b on the input screen 61 exemplified in FIG. 12 is clicked or an operation for instructing closing of the input screen 61 (for instance, clicking of the close button) is performed. When the operation for instructing closing of the input screen 61 is performed or the submit button 61b is clicked, the CPU 50h advances the processing to step S204.

In step S204, the CPU 50h judges whether or not the operation by the operator is the operation for instructing closing of the input screen 61. If the operation by the operator is the operation for instructing closing of the input screen 61, the CPU 50h terminates the section part searching process in FIG. 11. On the other hand, if the operation by the operator is not the operation for instructing closing of the input screen 61, i.e., the submit button 61b on the input screen 61 is clicked, the CPU 50h diverts the processing from step S204 to step S205.

In step S205, the CPU 50h obtains the keyword that is set in the combo box 61a at the time when the submit button 61b is clicked, and advances the processing to step S206.

Note that these steps S201 through S205 correspond to the above-mentioned accepting procedure. Moreover, the CPU 50h executing these steps S201 to S205 corresponds to the accepting part.

In step S206, the CPU 50h creates a work table. In this work table, a piece of information that forms a part of the candidate information retrieved in next step S207 and the related information are temporarily stored. Here, a piece of information that forms a part of the candidate information is defined as minimum information necessary to specify the section part. Specifically, the piece of information is the identification data, the start point time and the end point time. By the identification data, the video data 54 to replay the video content containing the section part is specified. Moreover, the section part of the video content is specified by the start point time and the end point time. Therefore, the start point time and the end point time correspond to the above-mentioned section information. Note that the work table created in step S206 is a new work table that has no record.

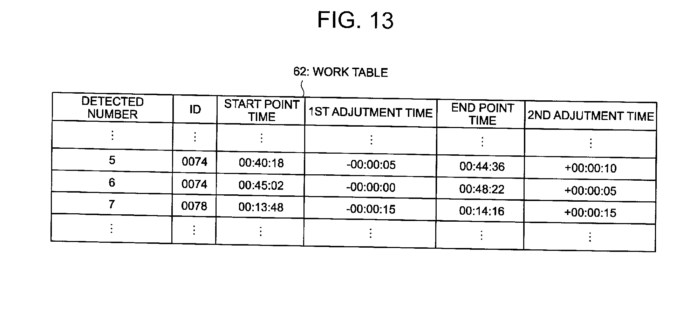

FIG. 13 is diagram schematically illustrating the work table 62.

Each record in the work table 62 has "detected number", "ID", "start point time", "first adjustment time", "end point time" and "second adjustment time" fields.

In the "detected number" field, stored is a detected number indicating the order in which the candidate information has been detected in step S207 In the "ID" field, the identification data included in the candidate information is stored. In the "start point time" field and the "end point time" field, the start point time and the end point time included in the candidate information are stored, respectively. In the "first adjustment time" field, stored is first adjustment time used to adjust the start position (start point time) of the section part before replaying of the section part specified by the identification data is requested to the decoder 52f. Note that the first adjustment time of the first embodiment is a negative value. The start position of the section part is shifted towards earlier time side of the time axis by adding this first adjustment time to the start point time. In the "second adjustment time" field, stored is a second adjustment time used to adjust the end position (end point time) of the section part before replaying of the section part specified by the identification data is requested to the decoder 52f. Note that the second adjustment time of the first embodiment is a positive value. The end position of the section part is shifted towards later time side of the time axis by adding this second adjustment time to the start point time.

The CPU 50h having created the work table 62 as illustrated in FIG. 13 advances the processing from step S206 in FIG. 11 to step S207.

In step S207, the CPU 50h calls and executes a search subroutine. The search subroutine is a process of searching the candidate information table 56 in FIG. 5 with using the keyword obtained in step S205 as a search condition.

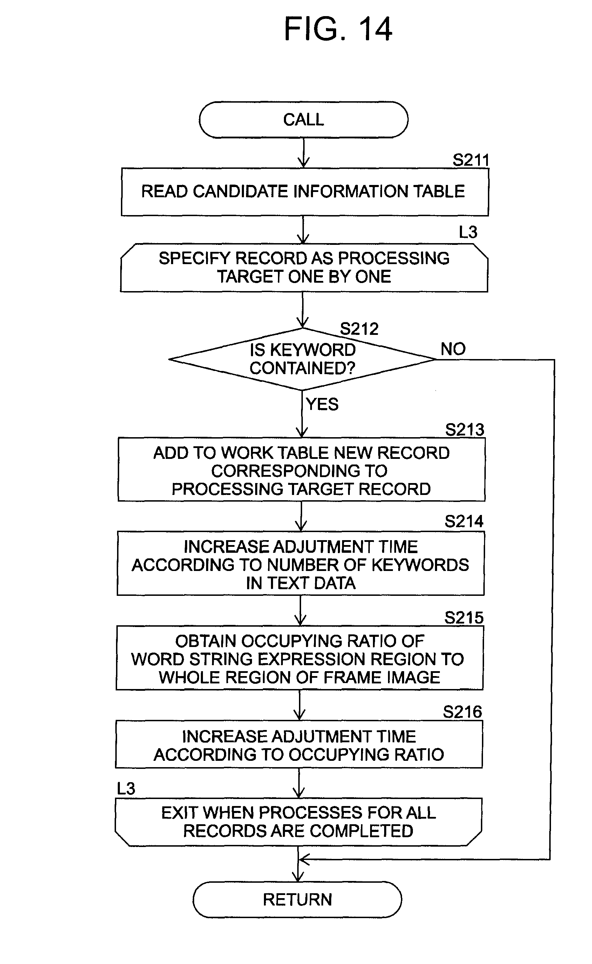

FIG. 14 is a flowchart of the search subroutine.

After starting the search subroutine, at first step S211, the CPU 50h reads out the candidate information table 56 in FIG. 6. Thereafter, the CPU 50h executes a third process loop L3.

In the third process loop L3, the CPU 50h specifies one record from the candidate information table 56 of FIG. 6 read out in step S211 as a processing target, and executes steps S212 through S216 for the specified record. Namely, the CPU 50h sequentially executes steps S212 through S216 for each record in the candidate information table 56 in FIG. 6.

In step S212, the CPU 50h judges whether or not the text data stored in the "appeared word string" field of the processing target record includes at least one of the keywords obtained in step S205 in FIG. 11. If the text data stored in the "appeared word string" field of the processing target record does not include any keyword obtained in step S205 in FIG. 11, the CPU 50h diverts the processing from step S212, and terminates the third process loop L3 for the current processing target record. On the other hand, if the text data stored in the "appeared word string" field of the processing target record includes one or more keywords obtained in step S205 in FIG. 11, the CPU 50h advances the processing from step S212 to step S213.

In step S213, the CPU 50h performs a process of adding a new record corresponding to the processing target record to the work table 62 in FIG. 13. Specifically, in this process, the identification data, the start point time and the end point time included in the processing target record are stored in the "ID" field, the "start point time" field and the "end point time" field of the new record, respectively. Moreover, in "detected number" field of the new record, stored is the number obtained by adding "1" to the maximum detection number of the records that have already been recorded in the work table 62 of FIG. 13. Furthermore, 00:00:00 is stored in each of the "first adjustment time" field and the "second adjustment time" as the initial value.

Note that step S211 in FIG. 11 and steps S211 through S213 correspond the above-mentioned retrieval procedure. Moreover, the CPU 50h executing step S211 in FIG. 11 and steps S211 through S213 corresponds to the searching part.

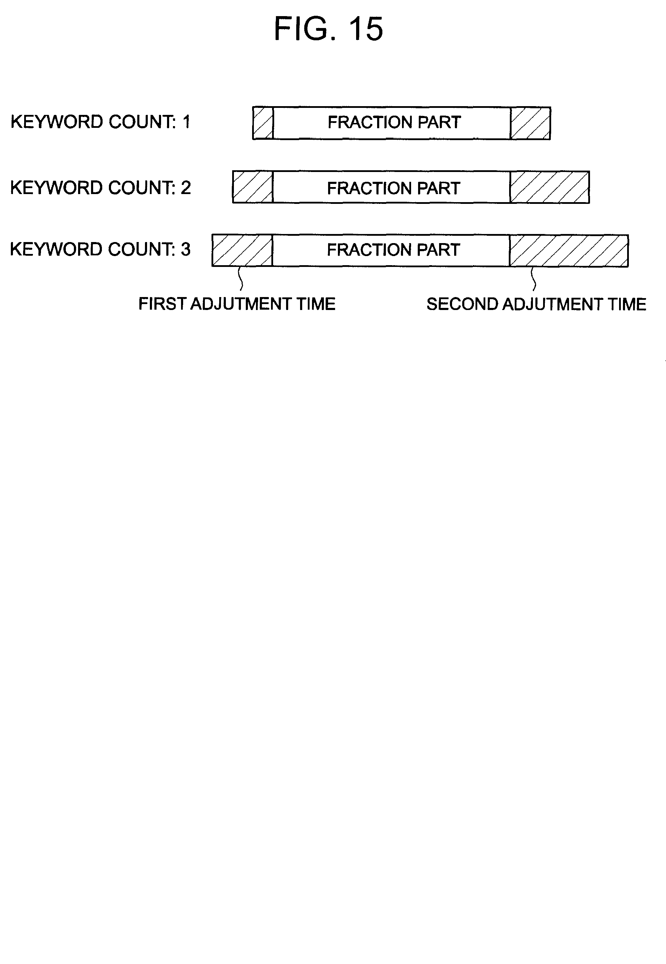

In next step S214, the CPU 50h counts the keywords included in the text data in the "appeared word string" field of the processing target record. Then, the CPU 50h performs a process of increasing the first and second adjustment time included in the new record added to the work table 62 in FIG. 13 in step S213 on the basis of the counted number. In the first embodiment, when Q denotes the number of keywords included in the text data, (-5 x Q) seconds are added to the first adjustment time and the (10 x Q) seconds are added to the second adjustment time. Therefore, as schematically depicted in FIG. 15, the replay time of the section part specified by the new record added to the work table 62 in FIG. 11 in step 213 becomes longer in a manner where the section part extends toward ahead and behind as the occupying ratio of the word string expressing region rises. The number of seconds added to the first or second adjustment time is not limited to Q times of 5 or 10. The number of seconds can be arbitrary value as long as the value is proportional to the quotient Q.

In next step S215, the CPU 50h reads the vertical and horizontal sizes included in the processing target record and the vertical and horizontal sizes of the frame images that compose the section part specified by the processing target record. Subsequently, the CPU 50h obtains, based on the vertical and horizontal sizes of the word string expressing region and the frame images, a ratio of the word string expressing region to the whole frame image as the occupying ratio.

In next step S216, the CPU 50h performs a process of increasing the first and second adjustment time in the new record added to the work table 62 in FIG. 13 in step S213 based on the occupying ratio obtained in step S215. Note that, in the first embodiment, when R denotes the integer part of the quotient obtained by dividing the occupying ratio by 10, (-5 x R) seconds are added to the first adjustment time and the (5 x R) seconds are added to the second adjustment time. Therefore, as schematically depicted in FIG. 15, the replay time of the section part specified by the new record added to the work table in FIG. 11 in step 213 becomes longer in a manner where the section part extends toward ahead and behind as the occupying ratio of the word string expressing region rises. The number of seconds added to each of the first and second adjustment time is not limited to R times of 5. The number of seconds can be arbitrary value as long as the value is proportional to the quotient R. After performing the process of increasing the first and second adjustment time, the CPU 50h terminates the third process loop L3 for the current processing target record.

The CPU 50h exits from the third process loop L3 when having executed steps S212 through S216 for every record read from the candidate information table 56 in FIG. 6 in step S211, and terminates the search subroutine in FIG. 14.

When the search subroutine is finished, the CPU 50h returns to the section part searching process in FIG. 11, and advances the processing to step S208.

In step S208, the CPU 50h calls and executes a total replay time adjusting subroutine. The total replay time adjusting subroutine is a process of adjusting the sum of the replay time of the section parts specified by all records in the work table 62 in FIG. 13.

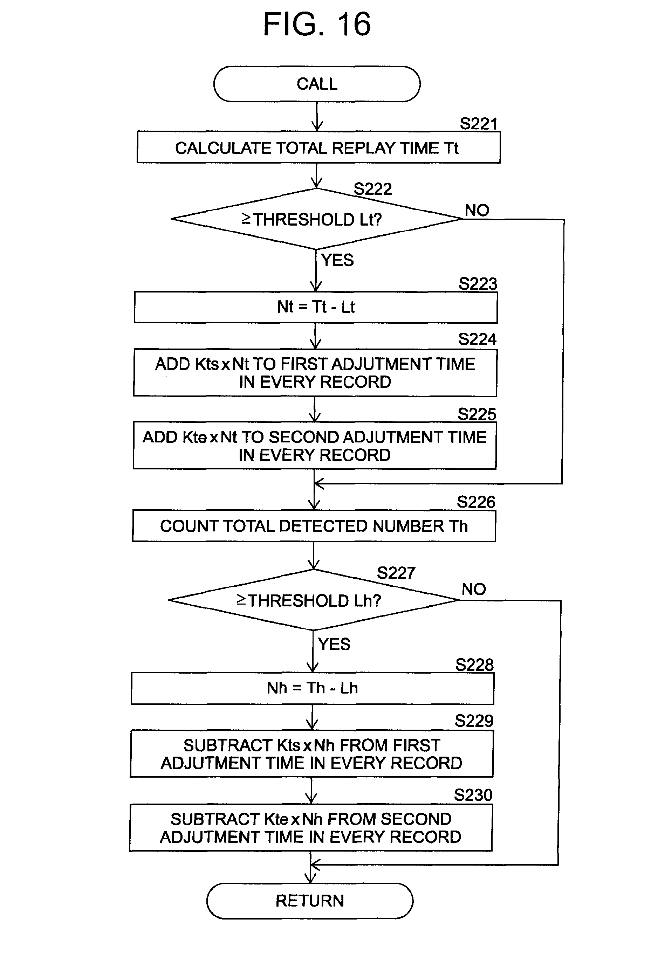

FIG. 16 is a flowchart of the total replay time adjusting subroutine.

After starting the total replay time adjusting subroutine, in first step S221, the CPU 50h calculates replay time of the section part specified by each record in the work table 62 in FIG. 13. Note that the replay time of one section part is obtained by subtracting adjusted start point time from adjusted end point time. The adjusted end point time is obtained by adding the second adjustment time to the end point time. The adjusted start point time is obtained by adding the first adjustment time to the start point time. Subsequently, the CPU 50h calculates the sum of the replay time of the section parts specified by all records in the work table 62 in FIG. 13. The sum of the replay time of one or more section parts will hereinafter be called the total replay time Tt.

In next step S222, the CPU 50h judges whether the total replay time calculated in step S221 is larger than or equal to the predetermined threshold Lt. Then, if the total replay time calculated in step S221 is less than the predetermined threshold Lt, the CPU 50h diverts the processing from step S222 to step S226. On the other hand, if the total replay time Tt calculated in step S221 is larger than or equal to the predetermined threshold Lt, the CPU 50h advances the processing from step S222 to step S223.

In step S223, the CPU 50h subtracts the predetermined threshold Lt used in step S222 from the total replay time Tt calculated in step S221. Subsequently, the CPU 50h substitutes the value obtained by the subtraction for a variable Nt.

In next step S224, the CPU 50h multiplies the value of the variable Nt by a predetermined coefficient Kts. Then, the CPU 50h adds the value obtained by the multiplication to the value in the "first adjustment time" field of every record in the work table 62 in FIG. 13. In the first embodiment, the predetermined coefficient Kts is a negative value. Therefore, the start position of the section part specified by the record in the work table 62 in FIG. 13 is shifted toward the start point of the video content, thereby the replay time of the section part is extended.

In next step S225, the CPU 50h multiplies the value of the variable Nt by a predetermined coefficient Kte. Subsequently, the CPU 50h adds the value obtained by the multiplication to the value of the "second adjustment time" field in each record in the work table 62 of FIG. 13. The predetermined coefficient Kte of the first embodiment is a positive value. Therefore, the end position of the section part specified by the record in the work table 62 in FIG. 13 shifts to the end point of the video content, thereby the replay time of the section part is extended.

When having performed the process of adjusting the first and second adjustment time included in every record in the work table 62 in FIG. 13 in steps S224 and S225, the CPU 50h advances the processing to step S226.

In step S226, the CPU 50h counts the number of records in the work table 62 in FIG. 13 to obtain a total detected number Th (hit count).

In next step S227, the CPU 50h judges whether the total detected number Th obtained in step S226 is larger than or equal to a predetermined threshold Lh. If the total detected number Th obtained in step S226 is smaller than the predetermined threshold Lh, the CPU 50h diverts the processing from step S227 and terminates the total replay time adjusting subroutine in FIG. 16. On the other hand, if the total detected number Th obtained in step S226 is larger than or equal to the predetermined threshold Lh the CPU 50h advances the processing from step S227 to step S228.

In step S228, the CPU 50h subtracts the predetermined threshold Lh used in step S227 from the total detected number Th obtained in step S226. Subsequently, the CPU 50h substitutes the value obtained by the subtraction for a variable Nh.

In next step S229, the CPU 50h multiplies the value of the variable Nh by a predetermined coefficient Khs. Subsequently, the CPU 50h subtracts the value obtained by the multiplication from the value of the "first adjustment time" field in every record in the work table 62 of FIG. 13. The predetermined coefficient Khs of the first embodiment is a negative value. Therefore, the start position of the section part specified by the record in the work table 62 in FIG. 13 shifts toward the end point of the video content, thereby the replay time of the section part is shortened. However, when the subtraction causes the first adjustment time to reach a positive value across 0, the CPU 50h adjusts the first adjustment time to 0. The first adjustment time is for making the start position of the section part shift to the starting point of the video content. Therefore, the first adjustment time is so controlled as to not take a positive value so that the section part where the word string is expressed is not eroded (shortened).

In next step S230, the CPU 50h multiplies the value of the variable Nh by a predetermined coefficient Khe. Subsequently, the CPU 50h subtracts the value obtained by the multiplication from the value of the "second adjustment time" field in every record in the work table 62 of FIG. 13. In the first embodiment, the predetermined coefficient Khe is a positive value. Therefore, the end position of the section part specified by the record in the work table 62 of FIG. 13 shifts to the starting point of the video content, thereby the replay time of the section part is shortened. However, when the subtraction causes the second adjustment time to reach a negative value across 0, the CPU 50h adjusts the second adjustment time to 0. The second adjustment time is for making the end position of the section part shift to the end point of the video content. Therefore, the second adjustment time is so controlled as to not take a negative value so that the section part where the word string is expressed is not eroded (shortened).

When having performed the process of adjusting the first and second adjustment time included in every record in the work table 62 in FIG. 13 in steps S229 and S230, the CPU 50h terminates the total replay time adjusting subroutine in FIG. 16.

When the total replay time adjusting subroutine is finished, the CPU 50h returns to the section part searching process in FIG. 11, and advances the processing to step S209.

In step S209, the CPU 50h performs a process of creating a playlist based on the work table 62 in FIG. 13. Specifically, the CPU 50h, at first, reads out one record from the work table 62 in FIG. 13. Subsequently, the CPU 50h records correspondence information that associates time obtained by adding the first adjustment time to the start point time; time obtained by adding the second adjustment time to the end point time; and the identification data into a list table not illustrated. The CPU 50h executes such recording process for every record in the work table 62 in FIG. 13. Afterwards, the CPU 50h sorts pieces of correspondence information in the list table not illustrated in the predetermined order (for instance, in the order of the detection numbers). Thus, the playlist is created in the list table not illustrated.

In next step S210, the CPU 50h performs a process of handing over the playlist created in step S209 to the replay control module 52e in FIG. 3. After performing the process of handing over the playlist to replay control module 52e in FIG. 3, the CPU 50h terminates the section part searching process in FIG. 11.

According to the section part searching process discussed above, when one or more keywords are input by the operator (user), some pieces of candidate information are retrieved, and the playlist that defines the replay order of the section parts specified by the retrieved pieces of candidate information. Note that, as already mentioned, the replay control module 52e, when receiving the playlist from the section part searching component 52h, sequentially replays the section parts according to the playlist by utilizing the decoder 52f. Namely, when pieces of candidate information are detected by the retrieval in step 207, a plurality of section parts specified by detected pieces of candidate information are continuously replayed in order.

Note that steps S214 through S216 in FIG. 14, step S208, steps S221 through S230 in FIG. 16, and steps S209 and S210 in FIG. 11 correspond to the above-mentioned control procedure. Moreover, the CPU 50h executing the replay control module 52e and the decoder 52f correspond to the above-mentioned replay means. Furthermore, the CPU 50h executing steps S214 through S216 in FIG. 14, step S208, steps S221 through S230 in FIG. 16, steps S209 and S210 in FIG. 11, the replay control module 52e and the decoder 52f corresponds to the above-mentioned replay unit.

### <<Operational effect>>

According to the TV personal computer 50 of the first embodiment, the section parts are extracted periodically or at a predetermined timing or an arbitrary timing from pieces of video content that can be replayed based on pieces of the video data 54 stored in the storage unit 50g by recording (steps S101-S103, S111-S116 and S121-S126).

Moreover, when one or more keywords are input through the input screen 61 in FIG. 12, one or more section parts in each of which the word string including at least one keyword is expressed are retrieved, and retrieved section parts are continuously replayed in order (steps S201-S210, S211-S216 and S221-S230).

Consequently, according to the first embodiment, the operator (user) can view easily his/her interesting parts of pieces of video content preserved in the computer.

Moreover, in the first embodiment, the replay time of the section part detected by keyword search is extended by the time that is proportional to the number of keywords included in the word string expressed in the section part (step S214). It is conceivable that the operator's interest in a section part becomes greater as the number of keywords included in the word string of the section part increases. Therefore, the first embodiment is so configured that, when a section part is quantitatively estimated to be a high interest part of the operator based on the number of keywords in the word string, the replay time of the section part is extended by increasing absolute values of the first and second adjustment time.

Moreover, in the first embodiment, the replay time of the section part detected by keyword search is extended by the occupying ratio of the word string expression region to the whole region of the frame image (steps S215 and S216). It is conceivable that the operator's interest in the section part becomes greater as the occupying ratio of the word string expression region increases Therefore, the first embodiment is so configured that, when a section part is quantitatively estimated to be a high interest part of the operator based on the occupying ratio of the word string expression region, the replay time of the section part is extended by increasing absolute values of the first and second adjustment time.

Moreover, in the first embodiment, if the total replay time Tt that is sum of one or more section parts detected by the keyword search is larger than the predetermined threshold Lt (step S222; YES), the product of the elapsed time Nt and the predetermined coefficient Kts and the product of the elapsed time Nt and the predetermined coefficient Kte are added respectively to absolute values of the first adjustment time and the second adjustment time on each section part (steps S223-S225). It is conceivable that the operator's interest in section parts detected by the keyword search becomes greater as the total replay time of the section parts increases. Therefore, the first embodiment is so configured that, when one or more section parts detected by the keyword search are quantitatively estimated to be, as a whole, a high interest part of the operator, the replay time of each section part is extended by increasing absolute values of the first and second adjustment time to extend the total replay time.

In next step S227, if the total detected number Th of section parts detected by the keyword search is larger than the predetermined threshold Lh (step S227; YES), the product of the excess number Nh and the predetermined coefficient Khs and the product of the excess number Nh and the predetermined coefficient Khe are subtracted respectively from the absolute values of the first adjustment time and the second adjustment time on each section part (steps S228-S230). When the total detected number (hit count) is large immoderately, the total replay time of one or more section parts becomes to be too long for the operator to view all the section parts, as the case may be. Therefore, the first embodiment is so configured that, when the total detected number of section parts detected by the keyword search is too large, the replay time of each section part is shortened by decreasing the absolute values of the first and second adjustment time on each section part to shorten the total replay time.

Note that, in the first embodiment, each of the first and second adjustment time on each of the detected one or more section parts is changed based on the excess time Nt of the total replay time Tt from the predetermined threshold Lt and/or the excess number Nh of the total detected number Th (hit count) from the predetermined threshold Lh. However, it is not necessary to change each of the first and second adjustment time on each of the detected one or more section parts based on the excess time Nt and/or the excess number Nh. It is possible, for instance, to add a preset value to each of the absolute values of the first and second adjustment time on each of the detected one or more section parts when the total replay time Tt is larger than the predetermined threshold Lt or the total detected number Th is larger than the predetermined threshold Lh.

Moreover, the section part searching component 52h of the first embodiment may perform, after having created the playlist (step S209), a process of concatenating, if two section parts whose intervals from start?? which overlaps each other exist, the two section parts into one section part. Furthermore, the section part searching component 52h of the first embodiment may perform, after having created the playlist (step S209), a process of deleting, if a section parts included in another section part exist, information on the section part included in another section part from the playlist.

Note that the word string of the first embodiment is the one that is expressed as characters in images of a section part. That is, the word string is the one that is obtained by performing the character recognition process for frame images contained in the section part. However, a word string may be the one that is recognized by processing information besides image. For example, a word string can be the one that is expressed as a sound in a speech of a section part. As examples of a sound expressing a word string in a speech, there are an utterance of a news announcer, an utterance of a spot announcer, a speech of a actor, words in monologue and an utterance of a quiz respondent. In this modified embodiment, spoken words are converted to word strings by a speech recognition engine not shown. In step S103 of the candidate extraction process in FIG. 8, instead of the subroutine in FIG. 9, performed is a process of registering a piece of the candidate information every time when one word string is recognized by the speech recognition engine not shown. Moreover,
the candidate information does not contain the position information and the vertical and horizontal sizes of the word string. As a result, steps S215 and S216 in the search subroutine in FIG. 14 are omitted

### [Second embodiment]

The second embodiment extracts the section part by using a method different from that of the first embodiment. According to the first embodiment, word string appearance regions are specified by using the character recognition engine from the pieces of video content reserved in the TV personal computer 50, thereby section parts are extracted. By contrast, according to the second embodiment, each part whose text for subtitle (captioning) includes a predetermined word is extracted as a section part from pieces of video content. Hereafter, parts different from the first embodiment are described.

Here, subtitles (closed captions) are textual versions of performer's utterance and sound effect in a television program that are displayed synchronizing with the progress of the television program. Since signal of text data for closed captioning is superimposed to the television signal of the television program with closed captions, the recorded video data 54 of this television program includes the text data for closed captions.
Consequently, when a piece of video content is replayed based on a video data 54 preserved in the TV personal computer 50, the text data for closed captioning can be utilized.

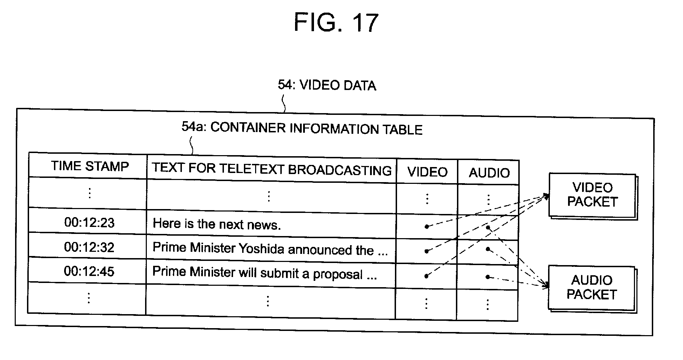

FIG. 17 is a diagram schematically illustrating a video data 54 obtained by recording the television program with closed captions.

As illustrated in FIG. 17, the video data 54 contains a plurality of image packets and a plurality of voice packets that are fixed size components of a stream data. Moreover, the video data 54 contains a container information table 54a. Each record of the container information table 54a includes a timestamp, a text data, and pointers of the image packets and pointers of the voice packets. The timestamp is start time of the image packets and the voice packets on the time axis of the video content. The text data is a data to display the closed captions displayed at the time denoted by the timestamp. «Process»

### <Candidate extraction>

In the second embodiment, the video data 54 as illustrated in FIG. 17 is reserved in the storage unit 50g of TV personal computer 50. Moreover, contents of step S103 (section part specifying subroutine) of the candidate extraction process in FIG. 8 that the CPU 50h executes according to the candidate extraction module 52g in FIG. 3 is different from that of the first embodiment

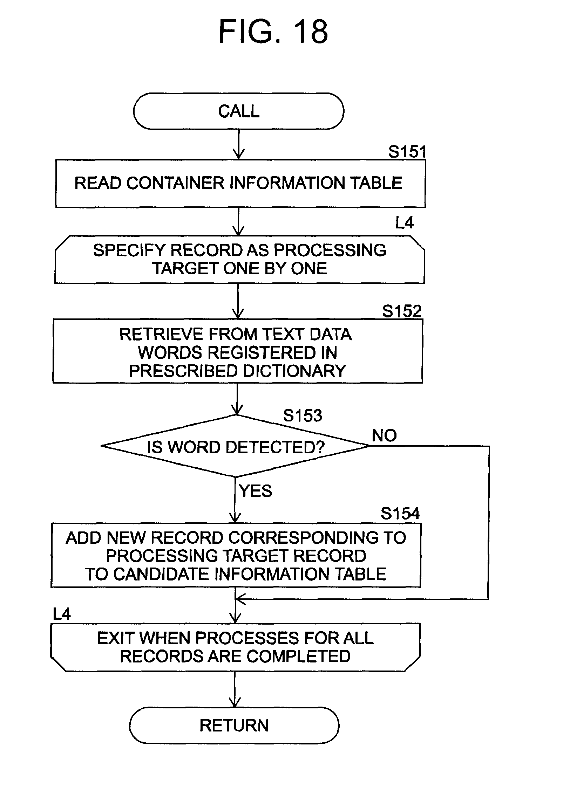

FIG. 18 is a flowchart of the section part specifying subroutine in the second embodiment.

After starting the section part specifying subroutine, in first step S151, the CPU 50h reads the container information table 54a in FIG. 17 from the video data 54 read in step S102 in FIG. 8. Subsequently, the CPU 50h executes a fourth process loop L4.

In the fourth process loop L4, the CPU 50h specifies, as a processing target, one record from the container information table 54a in FIG. 17 read in step S151, and executes steps S152 through S154 for the specified record. Namely, the CPU 50h sequentially executes steps S152 through S154 for each of the records in the container information table 54a in FIG. 17.

In step S152, the CPU 50h searches the text data in the processing target record with using words registered in the predefined dictionary as a search condition.

In next step S153, the CPU 50h judges whether or not a word registered in the predetermined dictionary is detected in the text data in the processing target record.
If a word registered in the predetermined dictionary is not detected in the text data in the processing target record, the CPU 50h diverts the processing from step S153, and terminates the fourth process loop L4 for the current processing target record.
On the other hand, if a word registered in the predetermined dictionary can be detected in the text data in the processing target record, the CPU 50h advances the processing to step S154.

In step S154, the CPU 50h obtains the timestamp in the processing target record and the timestamp in next record of the processing target record as the start point time and the end point time of the image packets and the voice packets specified by the processing target record. Subsequently, the CPU 50h obtains the identification data of the video data 54 read in step S102 in FIG. 8. In addition, the CPU 50h obtains the text data in the processing target record. Afterwards, the CPU 50h adds a new record including obtained identification data, start point time, end point time and text data to the after-mentioned candidate information tables 57. Thus, in the second embodiment, the image packets and the voice packets specified by the processing target record are extracted as a section part

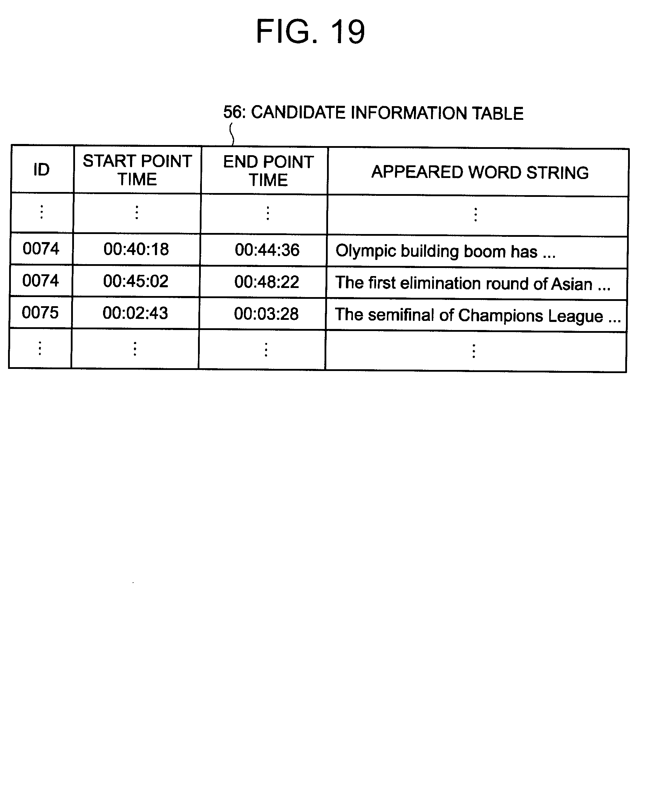

FIG. 19 is a diagram schematically illustrating the candidate information table 57 in the second embodiment.

As is obvious by comparing Fig. 19 with Fig. 6, each record in the candidate information table 57 of the second embodiment doesn't have the "position" and "Size" fields. This is because a process of specifying word string regions from frame images by utilizing character recognition engine, like step S112 in FIG. 9, is not performed in the second embodiment.

After adding the new record to the candidate information table 57 depicted in FIG. 19 in step S154 in FIG. 18, the CPU 50h terminates the fourth process loop L4 for the current processing target record.

The CPU 50h exits from the fourth process loop L4 when having performed steps S152 through S154 for every record in the container information table 54a in FIG. 17, and the CPU 50h terminates the section part specifying subroutine in FIG. 18.

### <Section part searching>

Moreover, each record in the candidate information table 57 in the second embodiment doesn't have the "position" and "size" field. Therefore, it is impossible to perform the process by steps S215 and S216, i.e. the process of adjusting the replay time of the section part based on the occupying ratio of the word string region to the whole region of the frame data. As a result, in step S127 of the replay time adjusting process in FIG. 11, executed is a search subroutine whose contents is different from that of the first embodiment.

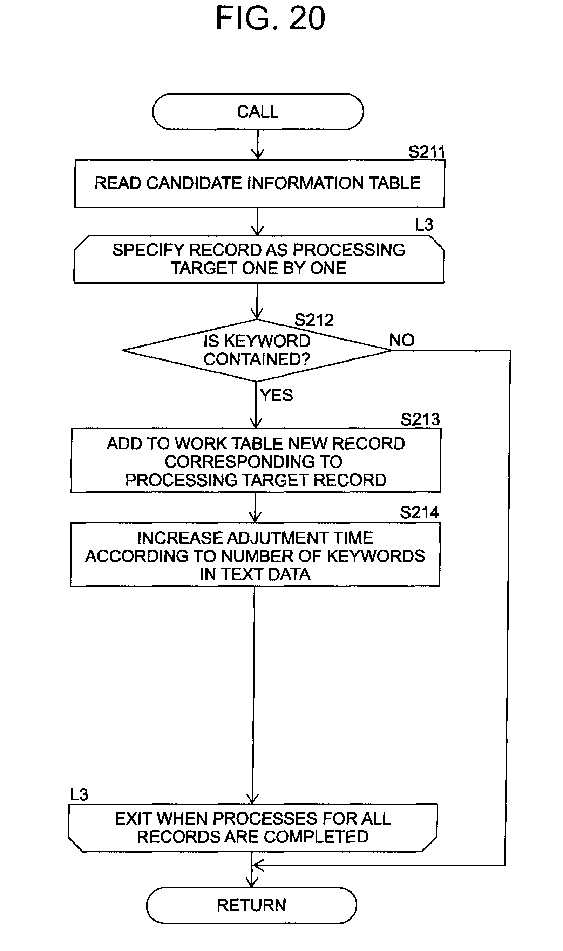

FIG. 20 is a flowchart of the search subroutine in the second embodiment.

As is obvious by comparing Fig. 20 with Fig. 14, steps S215 and S216 are omitted in the second embodiment.

### <<Operational effect>>

According to the TV personal computer 50 of the second embodiment, the section parts are extracted periodically or at a predetermined timing or an arbitrary timing from pieces of video content that can be replayed based on pieces of video data 54 preserved in the storage unit 50g by recording (steps S101-S103 and S151-S154).

Moreover, when one or more keywords are input, each section part whose word string includes at least one of the keywords is retrieved from one or more section parts, and retrieved section parts are continuously replayed in order (steps S201-S210, S211-S214 and S221-S230).

Consequently, according also to the second embodiment, the operator (user) can view easily his/her interesting parts in one or more pieces of video content preserved in the computer by recording.

### [Third embodiment]

### «Configuration»

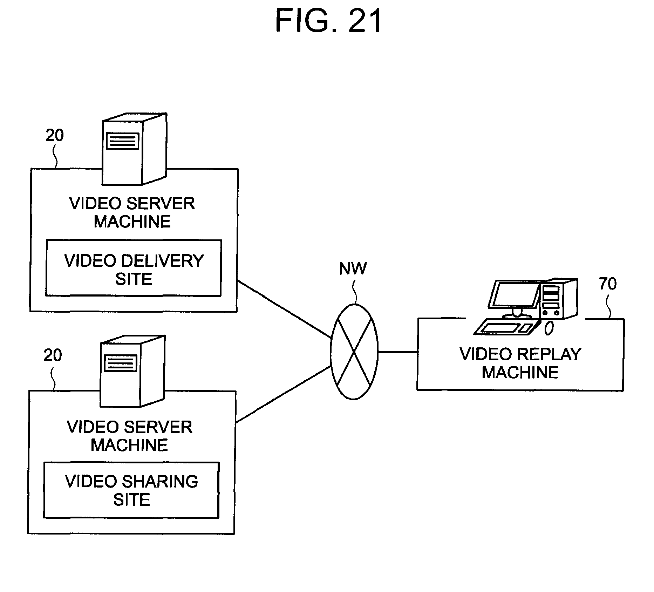

FIG. 21 is a diagram illustrating a configuration of a computer network system in the third embodiment.

In the third embodiment, a video data is obtained from a source different from that of the first embodiment. In the first embodiment, the TV personal computer 50 receives the television signal transmitted from the television signal transmitting device 10 by the television tuner unit 50e, and obtains the video data 54 from the received television signal. By contrast, in the third embodiment, a video replay machine 70 obtains the video data from the video server machine 20 via network NW. Hereinafter, parts of the third embodiment different from those of the first embodiment will be discussed.

Here, the video server machine 20 is a computer into which installed are software and data that causes the computer to function as a video delivery site or video sharing site. The video delivery site is a Web site for a contents holder to accept a request for a video data from a user and to deliver the video data. For instance, there is Gyao (trademark of the USEN Co.) as a video delivery site. Moreover, the video sharing site is a Web site to retain some video data up-loaded by users and to provide a user with the video data selected by the user. For instance, there is YouTube (trademark of the YouTube Co.) as video sharing site.

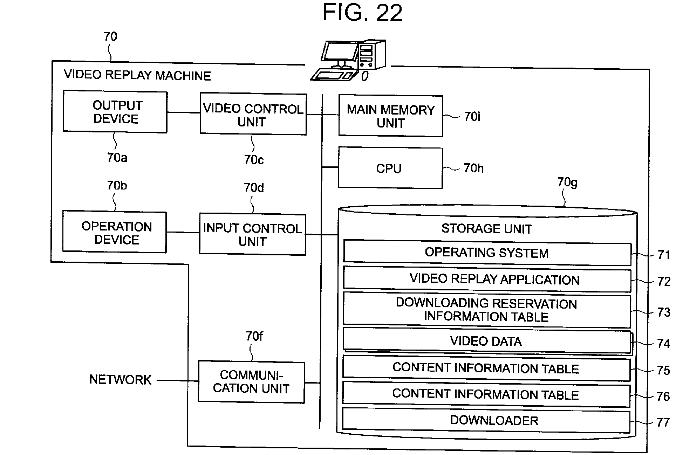

FIG. 22 is a diagram illustrating a configuration of the video replay machine 70 in the third embodiment.

The video replay machine 70 is a personal computer to which a capability to obtain video data from the video server machine 20 is added. The video replay machine 70 is provided with a output device 70a, a operation device 70b, and a main body to which the output devices 70a and 70b are connected as in the case of the TV personal computer in the first embodiment. Within the main body, a video control unit 70c, an input control unit 70d, a storage unit 70g, a CPU 70h and a main memory unit 70i are installed. Moreover, the main body in the third embodiment is not equipped with the television tuner unit 50e, but equipped with a comprise communication unit 70f.

The communication unit 70f exchanges data with other computers in the network NW. Examples of the communication unit 70f are an Ethernet (trademark of Xerox Co. in the United States) card, a FC (Fibre Channel) card, an ATM (Asynchronous Transfer Mode) card, a token ring card, FDDI (Fiber-Distributed Data Interface) card, a wireless LAN (Local Area Network) card, a Bluetooth (trademark of Bluetooth SIG Inc.) card, a data communication card, and a modem card. The communication unit 70f may be, for instance, the type of unit that is connected with the main body of the video replay machine 70 through a PC card slot, a PCI card slot, a USB slot, a SCSI (Small Computer System Interface) slot, an AGP (Accelerated Graphics Port) slot, a CF (CompactFlash) card slot, a SD card slot and so on. The communication unit 70f communicates with relay devices in the network NW by wire or by wireless means. Examples of the relay device are a switching hub, a router, a FC switch, a FDDI switch, an ATM switch, a wireless hub, a wireless LAN router, a cellular phone transponder (line compensator), an electric wave transponder (repeater) for PHS (Personal Handyphone System), and a TA (Terminal Adapter).

An operating system 71 is stored in the storage unit 70g of the video replay machine 70 in the third embodiment as with the storage unit 50g in the first embodiment. The operating system 71 in the third embodiment contains a communication interface. An example of the communication interface is a TCP/IP (Transmission Control Protocol/Internet Protocol) suite.

Moreover, a video replay application 72, a download reservation information table 73, pieces of video data 74, a content information table 75, a candidate information table 76, and a downloader 77 are stored in the storage unit 70g in the third embodiment.

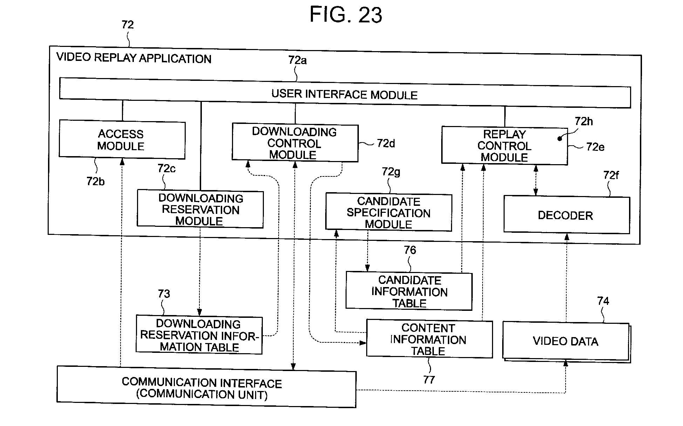

FIG. 23 is a diagram illustrating a configuration of the video replay application 72.

The video replay application 72 is a piece of software to add a capability to obtain the video data from the video server machine 20 to the personal computer. The video replay application 72 contains a user interface module 72a, an access module 72b, a download reservation module 72c, a download control module 72d, a replay control module 72e, a decoder 72f, and a candidate extraction module 72g.

The user interface module 72a accepts requests from the operator through prescribed GUI. Moreover, the user interface module 72a submits a process to the module corresponding to the request accepted from the operator or executes a process corresponding to the request. As the requests that can be accepted from the operator, there are, for instance, a request for displaying a list of pieces of video content that a video delivery site or a video sharing site can deliver or provide, a request for reservation of downloading of one or more pieces of video content based on the downloaded pieces of video data, a request for replaying a piece of video data, and a request for updating various pieces of setting information.

The access module 72b, when receiving a request from the user interface module 72a, obtains information on summaries of pieces of video content from a video delivery site or a video sharing site and hands over the obtained information to the user Interface module 72a. Note that the user interface module 72a, when receiving the information on summaries of pieces of video content from the access module 72b, performs a process of displaying a video content list on the output device 70a based on the information.

The download reservation module 72c, when the operator selects a piece of video content from the video content list, reserves downloading of a video data for the selected piece of video content. To reserve downloading of a video data, the download reservation module 72c stores a URL (Uniform Resource Locator) of a video delivery site or a video sharing site, information (for instance, file name) that specifies audiovisual content, reservation time (date and time) and so on into the download reservation information as a piece of download reservation information.

The download control module 72d downloads the video data specified by each piece of download reservation information whose reservation time comes in the download reservation information table 73. The download control module 72d makes the downloader 77 perform downloading of the video data. The downloader 77 downloads the video data specified by a piece of download reservation information from the video delivery site or the video sharing site specified by the piece of download reservation information. A communication interface in the operating system 71 and the communication unit 70f are used for downloading. The download control module 72d performs a process of storing the video data downloaded by the downloader 77 into the storage unit 70g. When the video data 74 is stored in the storage unit 70g as a result of the downloading, the download control module 72d stores a pieces of contents information on downloaded video data 74 into the content information table 75. Afterwards, the download control module 72d deletes, from the download reservation information table 73, the download reservation information corresponding to the video data that has been downloaded. Note that the content information table 75 in the third embodiment has the same field configuration as the content information table 55 illustrated in FIG. 4 has, the figure of the content information table 75 is therefore omitted.

The replay control module 72e performs a process of replaying one piece of video content selected by the operator from one or more pieces of video content reserved in the video replay machine 70 by downloading. The replay control module 72e, through the user interface module 52a, presents to the operator pieces of content information in the content information table 75 (refer to FIG. 4) in a manner where the operator can select arbitrary piece of content information. The replay control module 72e accepts, through user interface module 52a, the designation of the video content to be replayed. Moreover, the replay control module 72e replays the video content by utilizing the decoder 72f. Specifically, the replay control module 72e reads from the storage unit 70g the video data 74 for replaying the video content designated to be replayed, and feeds it to the decoder 52f. The decoder 52f extends the video data 74 fed from the replay control module 72e, and outputs the video content to the output device 70a.

The candidate extraction module 72g performs a process of extracting one or more section parts each expressing a word string from video content that can be replayed based on each video data 54 reserved in the storage unit 70g. Moreover, if one or more section parts are extracted from the video content, the candidate extraction module 72g stores a piece of candidate information on each of the extracted section parts into the candidate information table 76. Namely, the candidate extraction module 72g in the third embodiment has the same capability as the candidate extraction module 52g of the television application 52 in the first embodiment has. Therefore, in the third embodiment, the CPU 70h performs procedures in FIG. 8 through FIG. 10 according to the candidate extraction module 72g. Note that, similarly to the candidate extraction module 72g of the first embodiment, the candidate extraction module 72g of the third embodiment is so configured as to be executed, for instance, once a day at an appointed time. However, it is possible to configure modules so that completion of a video data downloading by the download control module 72d acts as a trigger to activate the candidate extraction module 72g It is also possible to configure modules so that the operator's instruction that is directly input by using the user interface module 72d acts as a trigger to activate the candidate extraction module 72g. Note that the content information table 76 of the third embodiment has the same field configuration as the content information table 56 illustrated in FIG. 4 has, the figure of the content information table 76 is therefore omitted.

The replay control module 72e of the third embodiment also includes a section part searching component 72h. The section part searching component 2h accepts one or more keywords from the operator, and searches multiple pieces of candidate information, i.e., the candidate information table 76 (refer to FIG. 6). Moreover, the section part searching component 72h creates a playlist defining replay order of the section parts specified by the detected pieces of candidate information. Note that the playlist is delivered from this section part searching component 72h to the replay control module 72e. The replay control module 72e having received the playlist sequentially replays, by utilizing the decoder 72f, the section parts according to the playlist. That is, when multiple pieces of candidate information are detected by the keyword search, multiple section parts specified by searched pieces of candidate information are continuously replayed in order.

It should be noted that, similarly to the section part searching component 52h in the first embodiment, the section part searching component 72h in the third embodiment is activated, for instance, when a prescribed button is clicked. The prescribed button may be contained on an application screen displayed under control of the user interface module 72a. Moreover, the section part searching component 72h may start automatically when the television application 72 is activated.

### «Operational effect»

According to the video replay machine 70 of the first embodiment, section parts are extracted periodically or at a predetermined timing or an arbitrary timing from pieces of video content based on pieces of video data 54 reserved in the storage unit 50g by downloading (steps S101-S103, S111-S116 and S121-S126).

Moreover, when one or more keywords are input, each section part whose word string includes at least one of the input keywords is retrieved from one or more section parts, and retrieved section parts are continuously replayed in order (steps S201-S210, S211-S219 and S221-S230).

Consequently, according to the third embodiment, the operator (user) can view easily his/her interesting parts of pieces of video content downloaded in the video replay machine.

Moreover, in the third embodiment also, the replay time of the section part detected by the keyword search is extended by the time that is proportional to the number of keywords included in the word string expressed in the section part (step S214).

Moreover, in the third embodiment also, the replay time of the section part detected by the keyword search is extended by the occupying ratio of the word string expression region to the whole region of the frame image (steps S215 and S216).

Moreover, in the third embodiment also, if one or more section parts detected by the keyword search are quantitatively estimated to be, as a whole, a high interest part of the operator (step S222; YES), the replay time of each section part is extended by increasing absolute values of the first and second adjustment time to extend the total replay time (steps S223-S225).

Moreover, in the third embodiment also, if the total detected number of section parts detected by the keyword search is too large (step S227; YES), the replay time of each section part is shortened by decreasing the absolute values of the first and second adjustment time on each section part to shorten the total replay time (steps S228-S230).

Note that, in the third embodiment, keyword candidates are obtained in step S201 in FIG. 11 from the table stored with keywords input by the user in the past or the candidate information table 76 (refer to FIG. 5). For example, among websites having search engines, there are web sites offering the service for providing a list of keywords frequently used as search condition. In step S201 in FIG 11, for instance, the CPU 70h may obtain, as keyword candidates, some (e.g. 10) keywords from such web sites in descending order of their frequencies used as search conditions

### [Fourth Embodiment]

The fourth embodiment accepts from the operator the search condition used for searching candidate information at the timing different from that of the third embodiment.

As discussed above, the search condition is accepted through the input screen 61 in FIG. 12 The input screen 61 is displayed (step S202 in FIG. 11) after the section part searching component 72h is started. The section part searching component 72h in the third embodiment, similarly to that in the first embodiment, is so configured as to start when a prescribed button in a window displayed under control of the user interface module 72a is clicked. Moreover, the section part searching component 72h may start automatically when the television application 72 is activated. Namely, the input screen 61 in the third embodiment is the one that is displayed after the operator (user) has directed that the section part searching component 72h or the video replay application 72 should be started.

By contrast, in the fourth embodiment, the section part searching component 72h is started when the replay control module 72e starts replaying of the video content specified from the operator through user interface module 72a. Hereinafter, parts different from the third embodiment will be discussed.

### <<Process>>

### <Section part searching>

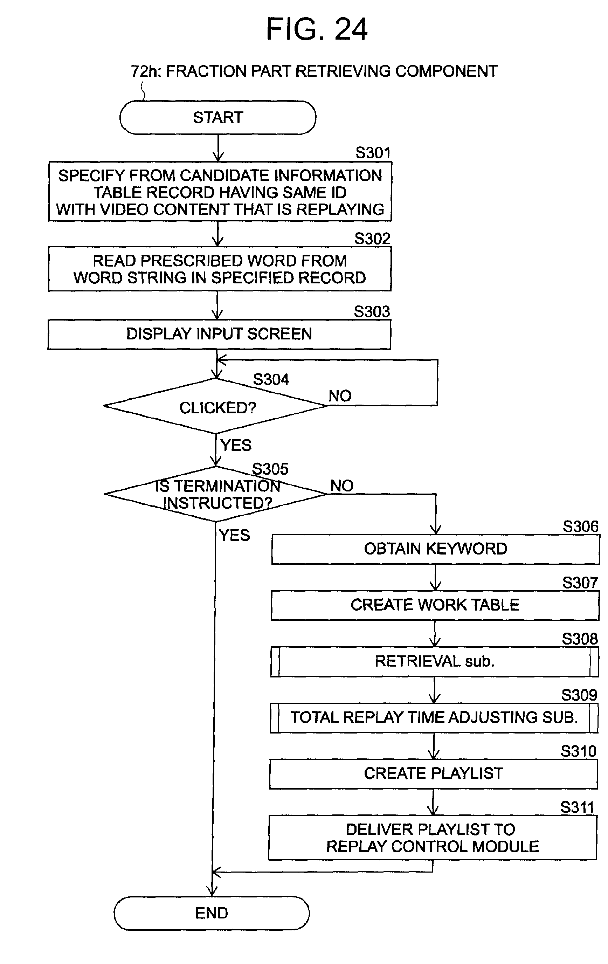

FIG. 24 is a flowchart of a section part searching process that the CPU 70h performs according to the section part searching component 72h in the fourth embodiment

After starting the section part searching process, at first step S301, the CPU 70h obtains the identification data of the piece of video content that the replay control module 72e replays with utilizing the decoder 72f. Subsequently, the CPU 70h specifies the record including the obtained identification data from the candidate information table 76 (refer to FIG. 5).

In next step S302, the CPU 70h reads from the text data included in the record specified in step S301 each word that matches one of words registered in the predetermined dictionary as a keyword candidate.

In next step S303, the CPU 70h performs a process of displaying the input screen 61 for the operator to input one or more keywords. The input screen 61 includes the combo box 61a and the submit button 61b as illustrated in FIG. 12. The combo box 61a is a text box, as mentioned above, is a text box that has the capability to develop the drop-down list box when a prescribed operation is done. In the drop-down list box, keyword candidates obtained in step S301 are displayed as selectable items. Moreover, the operator can type a keyword in the combo box 61a. The submit button 61b is a button to direct starting of the retrieval of candidate information with using the keyword input to combo box 61a. as the search condition.

Note that, in the fourth embodiment, the input screen 61 is contained in the application screen displayed in the window under control of the user interface module 72a. Moreover, input screen 61 is displayed near the frame to which the video contents under the replay are displayed. Moreover, the input screen 61 is displayed near the window in which video content is being displayed. However, the input screen 61 may be displayed in a window besides the window under control of the user interface module 72a. Moreover, the input screen 61 may be displayed as a desktop gadget in a topmost window.

After performing the process of displaying the input screen 61, the CPU 70h advances the processing to step S304 in FIG. 24.

In step S304, the CPU 70h waits for occurrence of an event in which the submit button 61b on the input screen 61 is clicked or an event in which replaying of the video content is completed. When the submit button 61b on the input screen 61 is clicked or replaying of the video content is completed, the CPU 70h advances the processing to step S305.

In step S305, the CPU 70h judges whether or not the event detected in step S304 is completion of replaying of the video content. When the event detected in step S304 is completion of replaying of the video content, the CPU 70h terminates the section part searching process in FIG. 24. On the other hand, if the event detected in step S304 is not completion of replaying of the video content, the CPU 70h decides that the submit button 61b on the input screen 61 is clicked, and diverts the processing from step S305 to step S306.

In step S306, the CPU 70h obtains the keyword set in the combo box 61a at that point and advances the processing to step S307.

Explanation of processes subsequent to step S307 is omitted, since they are the same with processes subsequent to step S206 in FIG. 11.

### <<Operational effect>>

According to the video replay machine 70 in fourth embodiment, when the operator (user) selects a video data from pieces of video data 74 preserved in the storage unit 70g by downloading, and a piece of video content is replayed based on the selected video data 74 and then the input screen 61 is displayed (steps S301 through S303). In the drop-down list box of the combo box 61a on the input screen 61, the words included in the word strings that are expressed in the images of the video content are displayed as the keyword candidates. When the operator selects a keyword candidate in the drop-down list box and directs the execution of the keyword search (step S305; NO), each fraction part that includes the keyword is detected (steps S307 through S309), and the detected section parts are replayed continuously (step S310 and S311).

Consequently, according to the fourth embodiment, the operator can view, by only inputting a keyword while video content is being replayed, his/her interesting parts of pieces of video content preserved by downloading in the video replay machine 70.

### [Fifth Embodiment]

### «Configuration»

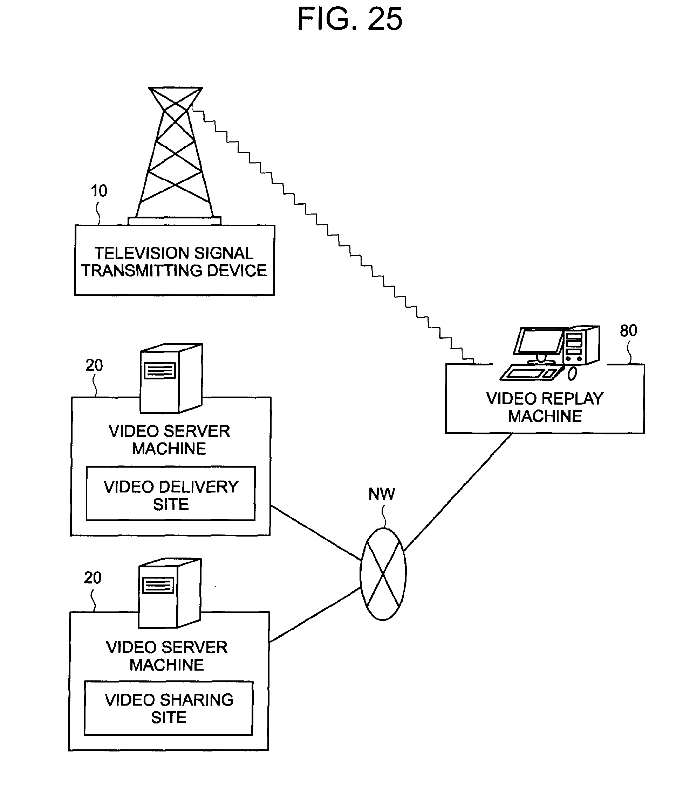

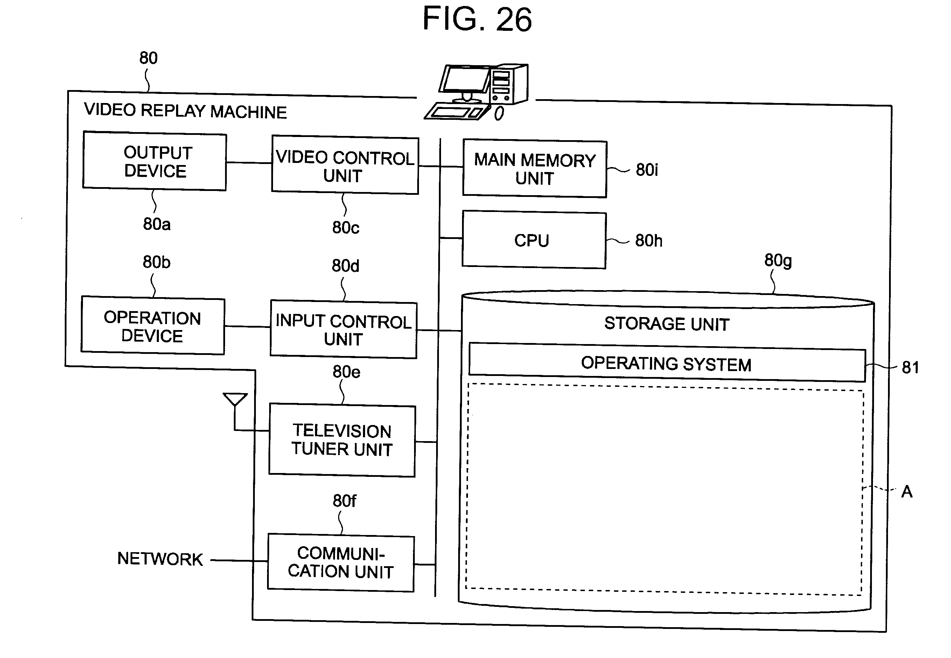

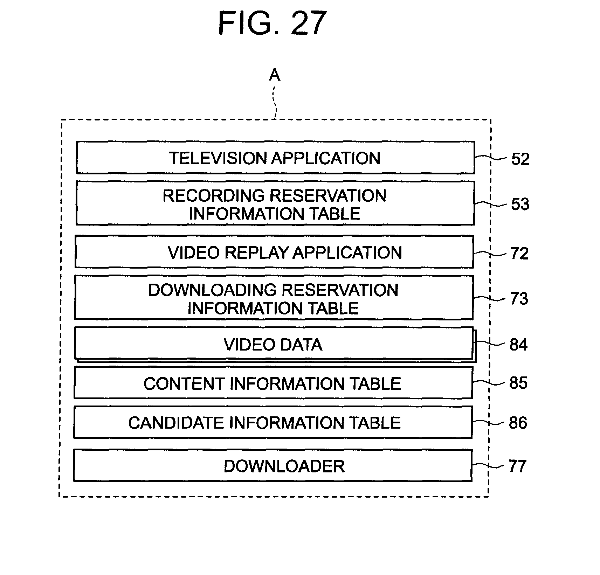

FIG. 25 is a diagram illustrating a configuration of a computer network system in the fifth embodiment. FIG. 26 is a diagram illustrating a configuration of a video replay machine 80 in the fifth embodiment. FIG. 27 is a diagram illustrating applications, data and tables stored in the storage unit 80g of the video replay machine 80 in the fifth embodiment.

As illustrated in FIG. 25 through FIG. 27, the fifth embodiment is an embodiment configured by combining the first and third embodiments. That is, in the personal computer in the fifth embodiment, the television application 52 of the first embodiment and the video replay application 72 in the third embodiment are installed.

The video replay machine 80 in the fifth embodiment is provided with an output device 80a, an operation device 80b and a main body with which these devices 80a and 80b are connected, similarly to the video replay machine 70 in the third embodiment. Within the main body, a video control unit 80c, an input control unit 80d, a storage unit 80g, a CPU 80h and a main memory unit 80i are installed. Furthermore, the main body is provided with both of a television tuner unit 80e and a communication unit 80f.

The storage unit 80g of the video replay machine 80 in the fifth embodiment is stored with a operating system 81, similarly to the storage unit 70g in the third embodiment. The operating system 81 in the fifth embodiment contains a communication interface.

Moreover, in the fifth embodiment, the recording reservation information table 53 that is used by the television application 52 for managing pieces of recording reservation information is stored in the storage unit 80g. Moreover, in the storage unit 80g, stored are the downloader 77 to download video data 84 and the reservation information table 73 that is used by the video replay application 72 for managing pieces of download reservation information.

Moreover, pieces of video data 84 is preserved in the storage unit 80g in the fifth embodiment by recording by the television application 52 or by download by the video replay application 72.

Moreover, in the storage unit 80g in the fifth embodiment, the content information table 85 and the candidate information table 86 are stored. Note that the content information table 85 in the fifth embodiment has the same field configuration as the content information table 55 illustrated in FIG. 4 has, the figure of the content information table 85 is therefore omitted. Moreover, the candidate information table 86 in the fifth embodiment has the same field configuration as the candidate information table 56 illustrated in FIG. 6 has, the figure of the candidate information table 86 is therefore omitted. The content information table 85 (refer to FIG. 4) and the candidate information table 86 (refer to FIG. 5) are used in common by the television application 52 and the video replay application 72.

### <<Operational effect>>

According to the video replay machine 80 in fifth embodiment, it is possible to obtain video data 84 from either of the television signal transmitting device 10 and the video server machine 20.

Moreover, according to the fifth embodiment, the television application 52 can replay a piece of video content based on a video data 84 that is downloaded by the video replay application 72. Conversely, the video replay application 72 can replay a piece of video content based on a video data 84 that is recorded by the television application 52.

According to the fifth embodiment, the operator (user) can view only his/her interesting parts in pieces of video content preserved in the video replay machine 80 by recording or by download by only inputting a keyword while the television application 52 or the video replay application 72 is active

### [Others]

### «Hardware components»

In the first through fifth embodiments discussed above, as hardware components included in the TV personal computer 50 and the video replay machines 70 and 80, there are, for instance, an FPGA (Field Programmable Gate Array), an ASIC (Application Specific Integrated Circuit), an LSI (Large Scale Integration), an IC (Integrated Circuit), a gate array, a logic gate, a signal processing circuit and an analog circuit. Among these components, the logic gate may include an AND, an OR, a NOT, a NAND, a flip-flop, a counter circuit, and so on. Moreover, the signal processing circuit may include circuit components that execute addition, multiplication, subtraction, inversion, a sum-of-products operation, differentiation, and integration of signal values. Further, the analog circuit may include circuit components that execute amplification, addition, multiplication, differentiation, integration, etc.

### «Software components»

In the first through fifth embodiments discussed above, as software components included in the TV personal computer 50 and the video replay machines 70 and 80, there are, for instance, an interface program, a driver program, a module program, a component program, a software component, a procedure-oriented language based component, an object-oriented software component, class software, a component managed as a task, a component managed as a process, a function, an attribute, a procedure, a subroutine (software routine), a fragment or segment of a program code, firmware, a microcode, a code, a code segment, an extra segment, a stack segment, a program area, a data area, data, a database, a data structure, a field, a record, a table, a matrix table, an array, a variable, and a parameter.

Moreover, the software components described above, may each be described in a C-language, C++, Java (trademark of Sun Microsystems in U.S.A.), Visualbasic (trademark of Microsoft Corp. in U.S.A.), Perl, Ruby, and other programming languages.

### <<Installation through communication>>

Any capability of the first to first through fifth embodiments discussed above may has been installed into the TV personal computer 50 and the video replay machines 70 and 80 through a wired network or a wireless network from an outside device, for instance, a web server device, a file server device, a host device, etc. In this case, program and data to achieve a capability may be transmitted from the outside device to the TV personal computer 50 and the video replay machines 70 and 80 according to a predetermined communication protocol. The TV personal computer 50 and the video replay machines 70 and 80 can achieve the capability by executing the program received from the outside device.

### «Installation through computer-readable medium»

Any capability of the first to first through fifth embodiments discussed above may has been installed into the TV personal computer 50 and the video replay machines 70 and 80 through a computer-readable medium from another computer. In this case, program and data to achieve a capability may be encoded and recorded in the computer-readable medium. The TV personal computer 50 and the video replay machines 70 and 80 can achieve the capability by reading the program from the computer-readable medium and executing it.

Here, the computer-readable medium connotes a recording medium capable of accumulating information such as the program and the data by electrical, magnetic, optical, chemical, physical, or mechanical action, and retaining the information in a readable-by-computer status. The electrical or magnetic action can be exemplified by writing the data to the element on the ROM [Read Only Memory] constructed by use of a fuse. The magnetic or physical action can be exemplified by a phenomenon of toners to form a latent image on a paper medium. Note that the information recorded on the paper medium can be read, e.g., optically. The optical and chemical action can be exemplified by forming a thin film or a rugged portion on a substrate. Incidentally, the information recorded in the ruggedness-utilized mode can be read, e.g., optically. The chemical action can be exemplified by oxidation-reduction reaction on the substrate, forming an oxide film or a nitride film on a semiconductor substrate, or a photoresist phenomenon. The physical or mechanical action can be exemplified by forming a rugged portion on an emboss card or forming a punch-hole in the paper medium.

### EXPLANATION OF REFERENCE NUMERALS AND SIGNS IN THE DRAWINGS

- 10: television signal transmitting device
- 20: server machine
- 50: TV personal computer
- 50a: output device
- 50b: operation device
- 50e: television tuner unit
- 50g: storage unit
- 50h: CPU
- 52: television application
- 52d: recording control module
- 52e: replay control module
- 52f: decoder
- 52g: candidate extraction module
- 52h: section part searching component
- 54: video data
- 55: content information table
- 56: candidate information table
- 61: input screen
- 61a: combo box
- 61b: submit box
- 70: video replay machine
- 70a: output device
- 70b: operation device
- 70f: communication unit
- 72: video replay application
- 72d: download control module
- 72e: replay control module
- 72f: decoder
- 72g: candidate extraction module
- 72h: section part searching component
- 74: video data
- 75: content information table
- 76: candidate information table
- 77: downloader

## Claims

1. A computer-readable medium storing a sequence of instructions for a program executable by a computer having replay means for replaying video content for carrying out the following steps:
accepting one or more keywords from a user;
searching a table for a word string including at least one of the accepted keywords, wherein the table includes section information specifying a section part that is a part of video content in which the word string is expressed, the word string, and an identification data specifying a video data for replaying the video content in a manner where the section information, the word string, and an identification data are associated with each other; and
performing a control procedure of causing the replay means to replay the section part specified by the identification data and the section information associated with the searched word string, wherein the control procedure includes a procedure of extending a replay time of the section part according to a counted number of the included in text data in the searched word string, wherein the table further includes region information associated with the section information, the word string and the identification data, the region information specifying a partial region which is within a whole region of an image of the video content and in which the word string is expressed,
the control procedure includes a procedure to further extend the extended replay time of the section part on the basis of an occupying ratio, which is the size of the partial region, specified by the region information in each
section part associated with the searched word string, to the size of the whole image region in each section part, and
the control procedure includes a procedure of further extending, when total replay time of section parts is larger than a prescribed threshold value, the extended replay time of each section part according to the length of the total replay time.

2. The computer-readable medium according to claim 1, wherein the control procedure includes a procedure of shortening the extended replay time of each section part when the number of the searched word strings is larger than a prescribed threshold value.

3. The computer-readable medium according to claim 1 or claim 2, further causing the computer to execute:
obtaining video data;
extracting a section part in which a word string is expressed from video content replayed based on the obtained video data; and
adding section information on the extracted section part, the word string and the identification data to the table.

4. A replay control method of controlling replay means for replaying video content executed by a computer, the method comprising:
accepting one or more keywords from a user;
searching a table for a word string including at least one of the accepted keywords, wherein the table includes section information specifying a section part that is a part of video content in which the word string is expressed,
the word string, and an identification data specifying a video data for replaying the video content in a manner where the section information, the word string, and an identification data are associated with each other; and
performing a control procedure of causing the replay means to replay the section part specified by the identification data and the section information associated with the searched word string, wherein the control procedure includes a procedure of extending a replay time of the section part according to a counted number of the keywords included in text data in the searched word string,
wherein
the table further includes region information associated with the section information, the word string and the identification data, the region information specifying a partial region which is within a whole region of an image of the video content and in which the word string is expressed,
the control procedure includes a procedure to further extend the extended replay time of the section part on the basis of an occupying ratio, which is the size of the partial region, specified by the region information in each section part associated with the searched word string, to the size of the whole image region in each section part, and
the control procedure includes a procedure of further extending, when total replay time of section parts is larger than a prescribed threshold value, the extended replay time of each section part according to the length of the total replay time.

5. The replay control method according to claim 4, wherein the replay control method further comprises any of the features of claim 2 or claim 3.

6. A replay apparatus for replaying video content, comprising:
an accepting part (52a) to accept one or more keywords from a user;
a searching part (52h) to search a table (56) for a word string including at least one of the accepted keywords, wherein the table includes section information specifying a section part that is a part of video content in which the word string is expressed, the word string, and an identification data specifying a video data for replaying the video content in a manner where the section information, the word string, and an identification data are associated with each other; and
a control part (52e) to cause a replay means to replay the section part specified by the identification data and the section information associated with the searched word string, wherein the control part is further configured to extend a replay time of the section part according to a counted number of the keywords included in text data in the searched word string, wherein the table further includes region information associated with the section information, the word string and the identification data, the region information specifying a partial region which is within a whole region of an image of the video content and in which the word string is expressed,
the control part is further configured to further extend the extended replay time of the section part on the basis of an occupying ratio, which is the size of the partial region, specified by the region information in each section part associated with the searched word string, to a size of the whole image region in each section part, and
the control part is further configured to further extend, when total replay time of section parts is larger than a prescribed threshold value, the extended replay time of each section part according to the length of the total replay time.

7. The replay apparatus according to claim 6, wherein the control part is further configured to shorten the extended replay time of each section part when the number of the searched word strings is larger than a prescribed threshold value.

8. The replay apparatus according to claim 6 or claim 7, further comprising:
an obtaining part to obtain video data;
an extracting part to extract a section part in which a word string is expressed from video content replayed based on the obtained video data; and
a registering part to add section information on the extracted section part, the word string and the identification data to the table.

## Patentansprüche

1. Computerlesbares Medium, das eine Anweisungssequenz für ein Programm speichert, das durch einen Computer ausführbar ist, der Wiedergabemittel zum Wiedergeben von Videoinhalt aufweist, zum Ausführen der folgenden Schritte:
Akzeptieren eines oder mehrerer Schlüsselwörter von einem Anwender;
Durchsuchen einer Tabelle nach einer Wortkette, die zumindest eines der akzeptierten Schlüsselwörter enthält, wobei die Tabelle Abschnittsinformation enthält, die einen Abschnittsteil spezifiziert, der ein Teil von Videoinhalt ist, in welchem die Wortkette ausgedrückt wird, die Wortkette und Identifikationsdaten, die Videodaten zum Wiedergeben des Videoinhalts in einer Weise spezifizieren, in der die Abschnittsinformation, die Wortkette und Identifikationsdaten miteinander assoziiert sind; und
Durchführen einer Steuerprozedur zum Veranlassen des Wiedergabemittels, den Abschnittsteil, der durch die Identifikationsdaten und die mit der gesuchten Wortkette assoziierten Abschnittsinformation spezifiziert ist, wiederzugeben, wobei die Steuerprozedur eine Prozedur des Verlängerns einer Wiedergabezeit des Abschnittteils gemäß einer gezählten Anzahl der in Textdaten in der durchsuchten Wortkette inkludierten Schlüsselwörter beinhaltet, wobei
die Tabelle weiter Regionsinformation enthält, die mit der Abschnittsinformation, der Wortkette und den Identifikationsdaten assoziiert ist, wobei die Regionsinformation eine partielle Region spezifiziert, die innerhalb einer Gesamtregion eines Bilds des Videoinhalts liegt, und in welcher die Wortkette ausgedrückt ist,
die Steuerprozedur eine Prozedur beinhaltet, um die verlängerte Wiedergabezeit des Abschnittsteils weiter zu verlängern, auf Basis eines Besetzungsverhältnisses, welches die Größe der partiellen Region ist, die durch die Regionsinformation in jedem Abschnittsteil spezifiziert ist, der mit der gesuchten Wortkette assoziiert ist, zur Größe der Gesamtbildregion in jedem Abschnittsteil, und
die Steuerprozedur eine Prozedur zum weiteren Verlängern beinhaltet, wenn die Gesamtwiedergabezeit von Abschnittsteilen länger als ein vorgegebener Schwellenwert ist, der verlängerten Wiedergabezeit jedes Abschnittsteils gemäß der Länge der gesamten Wiedergabezeit.

2. Computerlesbares Medium gemäß Anspruch 1, wobei die Steuerprozedur eine Prozedur des Verkürzens der erweiterten Wiedergabezeit jedes Abschnittteils beinhaltet, wenn die Anzahl von gesuchten Wortketten größer als ein vorgegebener Schwellenwert ist.

3. Computerlesbares Medium gemäß Anspruch 1 oder Anspruch 2, das weiter den Computer veranlasst, auszuführen:
Ermitteln von Videodaten;
Extrahieren eines Abschnittteils, in welchem eine Wortkette ausgedrückt ist, aus basierend auf den ermittelten Videodaten wiedergegebenem Videoinhalt; und Hinzufügen von Abschnittsinformation auf dem extrahierten Abschnittsteil, der Wortkette und den Identifikationsdaten zur Tabelle.

4. Wiedergabesteuerverfahren des Steuerns eines Wiedergabemittels zum Wiedergeben von Videoinhalt, welches durch einen Computer ausgeführt wird, wobei das Verfahren umfasst:
Akzeptieren eines oder mehrerer Schlüsselwörter von einem Anwender;
Durchsuchen einer Tabelle nach einer Wortkette, die zumindest eines der akzeptierten Schlüsselwörter enthält, wobei die Tabelle Abschnittsinformation enthält, die einen Abschnittsteil spezifiziert, der ein Teil von Videoinhalt ist, in welchem die Wortkette ausgedrückt wird, die Wortkette und Identifikationsdaten, die Videodaten zum Wiedergeben des Videoinhalts in einer Weise spezifizieren, in der die Abschnittsinformation, die Wortkette und Identifikationsdaten miteinander assoziiert sind; und
Durchführen einer Steuerprozedur zum Veranlassen des Wiedergabemittels, den Abschnittsteil, der durch die Identifikationsdaten und die mit der gesuchten Wortkette assoziierten Abschnittsinformation spezifiziert ist, wiederzugeben, wobei die Steuerprozedur eine Prozedur des Verlängerns einer Wiedergabezeit des Abschnittteils gemäß einer gezählten Anzahl der in Textdaten in der durchsuchten Wortkette inkludierten Schlüsselwörter beinhaltet, wobei
die Tabelle weiter Regionsinformation enthält, die mit der Abschnittsinformation, der Wortkette und den Identifikationsdaten assoziiert ist, wobei die Regionsinformation eine partielle Region spezifiziert, die innerhalb einer Gesamtregion eines Bilds des Videoinhalts liegt, und in welcher die Wortkette ausgedrückt ist,
die Steuerprozedur eine Prozedur beinhaltet, um die verlängerte Wiedergabezeit des Abschnittsteils weiter zu verlängern, auf Basis eines Besetzungsverhältnisses, welches die Größe der partiellen Region ist, die durch die Regionsinformation in jedem Abschnittsteil spezifiziert ist, der mit der gesuchten Wortkette assoziiert ist, zur Größe der Gesamtbildregion in jedem Abschnittsteil, und
die Steuerprozedur eine Prozedur zum weiteren Verlängern beinhaltet, wenn die Gesamtwiedergabezeit von Abschnittsteilen länger als ein vorgegebener Schwellenwert ist, der verlängerten Wiedergabezeit jedes Abschnittsteils gemäß der Länge der gesamten Wiedergabezeit.

5. Wiedergabesteuerverfahren gemäß Anspruch 4, wobei das Wiedergabesteuerverfahren weiter umfasst jegliches der Merkmale von Anspruch 2 oder Anspruch 3.

6. Wiedergabevorrichtung zum Wiedergeben von Videoinhalt, umfassend:
ein Akzeptierteil (52a) zum Akzeptieren eines oder mehrerer Schlüsselwörter von einem Anwender;
einen Suchteil (52h) zum Durchsuchen einer Tabelle (56) nach einer Wortkette, die zumindest eines der akzeptierten Schlüsselwörter enthält, wobei die Tabelle Abschnittsinformation enthält, die einen Abschnittsteil spezifiziert, der ein Teil von Videoinhalt ist, in welchem die Wortkette ausgedrückt wird, die Wortkette und Identifikationsdaten, die Videodaten zum Wiedergeben des Videoinhalts in einer Weise spezifizieren, in der die Abschnittsinformation, die Wortkette und Identifikationsdaten miteinander assoziiert sind; und
einen Steuerteil (52e) zum Veranlassen eines Wiedergabemittels, den Abschnittsteil, der durch die Identifikationsdaten und die mit der gesuchten Wortkette assoziierten Abschnittsinformation spezifiziert ist, wiederzugeben, wobei der Steuerteil weiter konfiguriert ist, eine Wiedergabezeit des Abschnittteils gemäß einer gezählten Anzahl der in Textdaten in der durchsuchten Wortkette inkludierten Schlüsselwörter zu verlängern, wobei
die Tabelle weiter Regionsinformation enthält, die mit der Abschnittsinformation, der Wortkette und den Identifikationsdaten assoziiert ist, wobei die Regionsinformation eine partielle Region spezifiziert, die innerhalb einer Gesamtregion eines Bilds des Videoinhalts liegt, und in welcher die Wortkette ausgedrückt ist,
der Steuerteil weiter konfiguriert ist, die verlängerte Wiedergabezeit des Abschnittsteils weiter zu verlängern, auf Basis eines Besetzungsverhältnisses, welches die Größe der partiellen Region ist, die durch die Regionsinformation in jedem Abschnittsteil spezifiziert ist, der mit der gesuchten Wortkette assoziiert ist, zu einer Größe der Gesamtbildregion in jedem Abschnittsteil, und
der Steuerteil weiter konfiguriert ist, wenn die Gesamtwiedergabezeit von Abschnittsteilen länger als ein vorgegebener Schwellenwert ist, die verlängerte Wiedergabezeit jedes Abschnittsteils gemäß der Länge der gesamten Wiedergabezeit weiter zu verlängern.

7. Wiedergabevorrichtung gemäß Anspruch 6, wobei der Steuerteil weiter konfiguriert ist, die verlängerte Wiedergabezeit jedes Abschnittteils zu verkürzen, wenn die Anzahl von gesuchten Wortketten größer als ein vorgegebener Schwellenwert ist.

8. Wiedergabevorrichtung gemäß Anspruch 6 oder 7, weiter umfassend:
einen Ermittlungsteil zum Ermitteln von Videodaten;
einen Extraktionsteil zum Extrahieren eines Abschnittteils, in welchem eine Wortkette ausgedrückt wird, aus wiedergegebenem Videoinhalt, basierend auf den ermittelten Videodaten; und
einen Registrierungsteil zum Hinzufügen von Abschnittsinformation über den extrahierten Abschnittsteil, die Wortkette und die Identifikationsdaten, zur Tabelle.

## Revendications

1. Support lisible par ordinateur stockant une séquence d'instructions pour un programme exécutable par un ordinateur ayant des moyens de relecture pour relire un contenu vidéo pour effectuer les étapes suivantes :
l'acceptation d'un ou plusieurs mots-clés de la part d'un utilisateur ;
la recherche dans une table d'une chaîne de mots incluant au moins un des mots-clés acceptés, où la table inclut des informations de section spécifiant une partie de section qui est une partie de contenu vidéo dans laquelle la chaîne de mots est exprimée, la chaîne de mots, et une donnée d'identification spécifiant une donnée vidéo pour relire le contenu vidéo d'une manière où les informations de section, la chaîne de mots, et une donnée d'identification sont associées les unes aux autres ; et
l'exécution d'une procédure de commande consistant à amener les moyens de relecture à relire la partie de section spécifiée par la donnée d'identification et les informations de section associées à la chaîne de mots recherchée, où la procédure de commande inclut une procédure consistant à prolonger un temps de relecture de la partie de section en fonction d'un nombre compté des données incluses dans le texte dans la chaîne de mots recherchée, où la table inclut en outre des informations de région associées aux informations de section, à la chaîne de mots et à la donnée d'identification, les informations de région spécifiant une région partielle qui est à l'intérieur d'une région entière d'une image du contenu vidéo et dans laquelle la chaîne de mots est exprimée,
la procédure de commande inclut une procédure pour prolonger davantage le temps de relecture prolongé de la partie de section sur la base du rapport d'occupation, qui est la taille de la région partielle, spécifiée par les informations de région dans chaque partie de section associée à la chaîne de mots recherchée, sur la taille de la région d'image entière dans chaque partie de section, et
la procédure de commande inclut une procédure consistant à prolonger davantage, lorsque le temps de relecture total de parties de section est plus grand qu'une valeur de seuil prescrite, le temps de relecture prolongé de chaque partie de section en fonction de la longueur du temps de relecture total.

2. Support lisible par ordinateur selon la revendication 1, dans lequel la procédure de commande inclut une procédure consistant à réduire le temps de relecture prolongé de chaque partie de section lorsque le nombre des chaînes de mots recherchées est plus grand qu'une valeur de seuil prescrite.

3. Support lisible par ordinateur selon la revendication 1 ou la revendication 2, amenant en outre l'ordinateur à exécuter :
l'obtention de données vidéo ;
l'extraction d'une partie de section dans laquelle une chaîne de mots est exprimée d'un contenu vidéo relu sur la base des données vidéo obtenues ; et
l'ajout d'informations de section sur la partie de section extraite, la chaîne de mots et la donnée d'identification à la table.

4. Procédé de commande de relecture permettant de commander des moyens de relecture pour relire un contenu vidéo exécuté par un ordinateur, le procédé comprenant :
l'acceptation d'un ou plusieurs mots-clés de la part d'un utilisateur ;
la recherche dans une table d'une chaîne de mots incluant au moins un des mots-clés acceptés, où la table inclut des informations de section spécifiant une partie de section qui est une partie de contenu vidéo dans laquelle la chaîne de mots est exprimée, la chaîne de mots, et une donnée d'identification spécifiant une donnée vidéo pour relire le contenu vidéo d'une manière où les informations de section, la chaîne de mots, et une donnée d'identification sont associées les unes aux autres ; et
l'exécution d'une procédure de commande consistant à amener les moyens de relecture à relire la partie de section spécifiée par la donnée d'identification et les informations de section associées à la chaîne de mots recherchée, où la procédure de commande inclut une procédure consistant à prolonger un temps de relecture de la partie de section en fonction d'un nombre compté des mots-clés inclus dans des données de texte dans la chaîne de mots recherchée, où
la table inclut en outre des informations de région associées aux informations de section, à la chaîne de mots et à la donnée d'identification, les informations de région spécifiant une région partielle qui est à l'intérieur d'une région entière d'une image du contenu vidéo et dans laquelle la chaîne de mots est exprimée,
la procédure de commande inclut une procédure pour prolonger davantage le temps de relecture prolongé de la partie de section sur la base du rapport d'occupation, qui est la taille de la région partielle, spécifiée par les informations de région dans chaque partie de section associée à la chaîne de mots recherchée, sur la taille de la région d'image entière dans chaque partie de section, et
la procédure de commande inclut une procédure consistant à prolonger davantage, lorsque le temps de relecture total de parties de section est plus grand qu'une valeur de seuil prescrite, le temps de relecture prolongé de chaque partie de section en fonction de la longueur du temps de relecture total.

5. Procédé de commande de relecture selon la revendication 4, dans lequel le procédé de commande de relecture comprend en outre l'une quelconque des caractéristiques de la revendication 2 ou de la revendication 3.

6. Appareil de relecture pour relire un contenu vidéo, comprenant :
une partie d'acceptation (52a) pour accepter un ou plusieurs mots-clés de la part d'un utilisateur ;
une partie de recherche (52h) pour rechercher dans une table (56) une chaîne de mots incluant au moins un des mots-clés acceptés, où la table inclut des informations de section spécifiant une partie de section qui est une partie de contenu vidéo dans laquelle la chaîne de mots est exprimée, la chaîne de mots, et une donnée d'identification spécifiant une donnée vidéo pour relire le contenu vidéo d'une manière où les informations de section, la chaîne de mots, et une donnée d'identification sont associées les unes aux autres ; et
une partie de commande (52e) pour amener un moyen de relecture à relire la partie de section spécifiée par la donnée d'identification et les informations de section associées à la chaîne de mots recherchée, où la partie de commande est en outre configurée pour prolonger un temps de relecture de la partie de section en fonction d'un nombre compté des mots-clés inclus dans des données de texte dans la chaîne de mots recherchée, où
la table inclut en outre des informations de région associées aux informations de section, à la chaîne de mots et à la donnée d'identification, les informations de région spécifiant une région partielle qui est à l'intérieur d'une région entière d'une image du contenu vidéo et dans laquelle la chaîne de mots est exprimée,
la partie de commande est en outre configurée pour prolonger davantage le temps de relecture prolongé de la partie de section sur la base d'un rapport d'occupation, qui est la taille de la région partielle, spécifiée par les informations de région dans chaque partie de section associée à la chaîne de mots recherchée, sur une taille de la région d'image entière dans chaque partie de section, et
la partie de commande est en outre configurée pour prolonger davantage, lorsque le temps de relecture total de parties de section est plus grand qu'une valeur de seuil prescrite, le temps de relecture prolongé de chaque partie de section en fonction de la longueur du temps de relecture total.

7. Appareil de relecture selon la revendication 6, dans lequel la partie de commande est en outre configurée pour réduire le temps de relecture prolongé de chaque partie de section lorsque le nombre des chaînes de mots recherchées est plus grand qu'une valeur de seuil prescrite.

8. Appareil de relecture selon la revendication 6 ou la revendication 7, comprenant en outre :
une partie d'obtention pour obtenir des données vidéo ;
une partie d'extraction pour extraire une partie de section dans laquelle une chaîne de mots est exprimée d'un contenu vidéo relu sur la base des données vidéo obtenues ; et
une partie d'enregistrement pour ajouter des informations de section sur la partie de section extraite, la chaîne de mots et la donnée d'identification à la table.
